# FASCICULE DE BREVET EUROPEEN

(11) **EP 3 140 896 B1**
(45) Date de publication et mention de la délivrance du brevet: **13.06.2018**
(21) Numéro de dépôt: 15721336.4
(22) Date de dépôt: 22.04.2015
(51) Int. Cl.: H02J 3/14, G01D 4/00

(54) **DISPOSITIF POUR REDUIRE LA PUISSANCE ELECTRIQUE CONSOMMEE PAR AU MOINS UNE CHARGE ELECTRIQUE DE PUISSANCE, SYSTEME ET PROCEDE ASSOCIES**
VORRICHTUNG ZUR VERRINGERUNG DES ELEKTRISCHEN LEISTUNGSVERBRAUCHS MINDESTENS EINE ELEKTRISCHE LAST, ZUGEHÖRIGES SYSTEM UND VERFAHREN
DEVICE FOR REDUCING THE ELECTRIC POWER CONSUMED BY AT LEAST ONE POWER ELECTRIC LOAD, ASSOCIATED SYSTEM AND METHOD

(30) Priorité: 06.05.2014 FR 1401037
(43) Date de publication de la demande: 15.03.2017
(73) Titulaire: Ergylink, 92300 Levallois-Perret (FR)
(72) Inventeur: GILBERT, Jérome, F-92300 Levallois Perret (FR)
(86) Numéro de dépôt international: PCT/IB2015/052953
(87) Numéro de publication internationale: WO 2015/170212

(56) Documents cités:
- WO-A1-2012/003404
- US-A- 5 699 276
- US-A1- 2014 058 575
- US-B1- 6 624 532

## Description

### Domaine technique

L'invention se situe dans le domaine de la gestion des réseaux d'énergie électrique.

### Etat de la technique antérieure

Les réseaux de distribution électriques modernes sont de plus en plus complexes comme le montre le brevet FR2976415. Ils comprennent notamment une part de plus en plus importante de production variable et des infrastructures de distribution proches de la saturation face à une demande en constante augmentation. La part de productions intermittentes d'origine solaire ou éolienne par exemple croit continument dans le mix énergétique de la plupart des pays engagés dans une démarche de transition énergétique vers davantage d'énergie renouvelable. Or la progression de la part issue des sources d'énergie renouvelable à production intermittente dans le mix énergétique au delà de 30% nécessite une augmentation de la flexibilité du réseau électrique pour notamment maitriser à la baisse la puissance consommée pour équilibrer la demande et la production d'énergie électrique à tout moment. La possibilité de commander la réduction, voir l'effacement, de consommations permet en outre d'améliorer la qualité du service fourni en évitant de devoir délester globalement des secteurs du réseau en cas d'insuffisance de production ayant pour cause une baisse imprévue de production intermittente ou la survenue d'un incident affectant la puissance disponible.

Des solutions comme celle décrite dans le brevet WO 2008017754 sont connues mais ne sont pas pleinement satisfaisantes car elles requièrent notamment des infrastructures sophistiquées ainsi que la mesure et la transmission des consommations dans le cadre d'une gestion centralisée.

La présente invention peut être avantageusement combinée avec le dispositif pour piloter au moins un sous-ensemble apte à transformer de l'énergie électrique et à la stocker sous forme thermique décrit dans la demande de brevet FR1400496 pour offrir une solution complète d'amélioration de la flexibilité d'un réseau électrique dans le but d'équilibrer la consommation et la production d'énergie en agissant sur la puissance consommée dans le sens approprié.

Cette invention entre dans le cadre général dit des réseaux électriques intelligents (« smart grid » en langue anglaise).

### Exposé de l'invention

Le but de la présente invention est de remédier au moins partiellement aux problèmes évoqués précédemment en proposant un dispositif pour piloter au moins une charge électrique de puissance dans le but de réduire la puissance électrique susceptible d'être consommée dans une installation terminale d'un réseau électrique comprenant un compteur d'énergie électrique derrière lequel le dispositif est raccordé.

Le dispositif selon l'invention est agencé pour recevoir au moins une consigne dont la réception déclenche la limitation, pendant un temps déterminé, de la puissance pouvant être consommée par l'au moins une charge électrique de puissance, à une valeur limite supérieure déterminée qui est inférieure à la puissance maximale de fonctionnement de l'au moins une charge électrique de puissance.

L'invention vise à limiter l'accès à la puissance d'un appareil qui peut être préalablement arrêté ou en marche lorsque l'au moins une consigne est reçue.

Le dispositif selon l'invention comprend des moyens pour recevoir au moins une consigne transmise par des moyens de commande à distance. Il est prévu par exemple que le dispositif comprenne un sous-ensemble de réception d'ordres de télécommande du système de gestion de la tarification de l'électricité, par exemple en France un récepteur TCFM (Télécommande Centralisée à Fréquence Musicale) à 175Hz ou 188 Hz ou un récepteur CPL (Courants Porteurs en Ligne) compatible « Linky » (marque déposée d'ERDF). Il est aussi prévu d'intégrer dans le dispositif un sous-ensemble de réception ou d'émission-réception radiofréquence ou CPL conformes aux standards appropriés, en lien direct ou par l'intermédiaire d'une passerelle Internet locale, avec une infrastructure de communication dite « M2M » (de machine à machine) et/ou « IoT » (internet des objets).

L'invention est en outre particulièrement économe en bande passante. En effet, la transmission d'une seule consigne suffit pour limiter ou réduire la consommation d'une quantité prédéterminée d'énergie électrique. Un système de communication unidirectionnel adressant simultanément une pluralité de destinataires suffit pour mettre en oeuvre efficacement l'invention. La consigne peut en effet être réduite à un ordre binaire sans paramètre associé. Dans ce cas il s'agit d'un ordre simple d'effacement latent ou effectif d'une quantité d'énergie prédéterminée. La prédétermination de la quantité d'énergie pouvant être directe au moyen d'une commande imposant une quantité d'énergie donnée à effacer, ou indirecte au moyen d'une commande imposant la durée d'effacement d'une puissance connue par ailleurs. La reprise du fonctionnement de l'au moins une charge de puissance pilotée à sa puissance nominale est gérée localement par le dispositif lorsque le temps est écoulé. Ce temps étant imposé par la consigne reçue ou calculé en fonction de la quantité d'énergie imposée par la consigne. La variante où la quantité d'énergie est directement imposée par la consigne est particulièrement avantageuse en ce que cela libère le système de contrôle d'avoir à gérer les dispositifs individuellement en leur assignant un temps d'effacement spécifique dépendant de la puissance de l'au moins une charge pilotée devant être préalablement connue du système de contrôle. Il est aussi prévu dans certaine variantes de mise en oeuvre que l'au moins une consigne détermine la durée de l'effacement et une valeur de puissance. La valeur de la puissance est par exemple la limité à ne pas dépasser dans l'installation terminale ou plus avantageusement la valeur de la réduction de puissance attendue de la réception de l'au moins une consigne.

Dans le cas d'appareils formant l'au moins une charge électrique de puissance selon l'invention qui ne proposent que deux modes de fonctionnement, le mode arrêt et le mode marche à la puissance nominale, la mise en oeuvre de l'invention revient à empêcher la mise en marche de l'au moins une charge électrique de puissance pendant un temps déterminé. Dans le cas d'appareils susceptibles de pouvoir fonctionner à plusieurs niveaux de puissance comme par exemple certains appareils de chauffage ou de climatisation, ou encore dans le cas d'un dispositif limitant la puissance consommée dans l'installation à une valeur maximale imposée par la réception de l'au moins une consigne en pilotant de manière appropriée une pluralité d'appareils de puissance, la mise en oeuvre de l'invention revient à empêcher la mise en marche de l'au moins une charge électrique de puissance au delà d'une puissance donnée pendant un temps déterminé. Il s'agit dans ce cas d'un effacement latent de la consommation.

Il est aussi prévu, dans le cas où l'au moins une charge électrique de puissance pilotée est en marche lorsque l'au moins une consigne est reçue, que la puissance consommée par l'au moins une charge électrique de puissance soit réduite, pendant un temps déterminé, à une valeur déterminée qui est inférieure à la puissance qui était consommée avant la réception de l'au moins une consigne. Il s'agit dans ce cas d'un effacement effectif de la consommation. Dans les modèles économiques associés à la mise en oeuvre technique de l'invention, la rémunération des parties prenantes qui acceptent de se voir interdire l'utilisation d'au moins un de leurs appareils au delà d'un certain niveau de puissance pendant un temps donné peut être valorisée d'une manière différente selon que la réduction de puissance imposée par la réception de la consigne se fait alors que l'appareil était préalablement en marche à une puissance supérieure ou qu'il ne l'était pas. La possibilité d'une telle différentiation nécessite une voie de retour depuis l'installation terminale concernée vers le gestionnaire. Cette voie de retour peut par exemple être partie d'un système d'information spécifique tel que proposé par exemple par le biais d'une « Box énergie » connectée à un système de transmission bidirectionnel. Il peut aussi s'agir par exemple de la surveillance de la courbe de charge que permet la présence d'un compteur communiquant dans l'installation terminale, par exemple en France un compteur « Linky » (marque déposée d'ERDF).

L'invention prévoit que la durée dudit temps déterminé soit imposée au dispositif par la réception de l'au moins une consigne à une puissance donnée de l'au moins une charge pilotée. Par exemple une consigne dont l'objet est de bloquer l'accès à la puissance au-delà d'un seuil déterminé pendant 10 minutes. Dans ce cas, lorsque l'émission de l'au moins une consigne doit être associée à une quantité d'énergie, par exemple dans le cadre d'une valorisation économique, il revient à un système d'information partie à l'émission de l'au moins une consigne, qui connait la puissance de l'au moins une charge pilotée, de calculer la quantité d'énergie correspondante.

Il est prévu en outre que l'au moins une consigne soit associée à une quantité prédéterminée d'énergie. La réception de l'au moins une consigne déclenche la maitrise d'une puissance déterminée pendant un temps déterminé ce qui revient en fait à maitriser une quantité prédéterminée d'énergie électrique. La maitrise de ladite quantité prédéterminée d'énergie électrique est implicite lorsque la réception de la consigne impose un temps de fonctionnement à une puissance limitée ou réduite donnée. La maitrise de ladite quantité prédéterminée d'énergie électrique est explicite lorsque la réception de la consigne impose directement un fonctionnement à une puissance limitée ou réduite pour une quantité d'énergie électrique donnée.

Il est aussi prévu que la durée dudit temps déterminé soit calculée par le dispositif en fonction de la valeur d'une puissance et de ladite quantité prédéterminée d'énergie. Ceci pour que l'émission de l'au moins une consigne puisse être associée à la réduction de la consommation effective ou potentielle d'une quantité prédéterminée d'énergie électrique.

La durée dudit temps déterminé est calculée par tout algorithme mis en oeuvre par l'exécution d'au moins une instruction dans un microprocesseur, même s'il ne s'agit pas de calcul au sens arithmétique du terme mais par exemple de la gestion de tables de valeurs en mémoire.

Il s'agit de faire en sorte que l'au moins une consigne, tant pour le système d'information qui la transmet que pour l'au moins un dispositif selon l'invention qui la reçoit, soit directement associée à une quantité prédéterminée d'énergie électrique. Par exemple une consigne dont l'objet est de bloquer l'accès à la puissance au-delà d'un seuil déterminé jusqu'à avoir évité la consommation de 0,5 kWh. Pour ce type de consigne, c'est le dispositif selon l'invention qui détermine le temps adéquat pour l'au moins une charge de puissance donnée. L'invention peut alors être mise en oeuvre dans un réseau électrique en faisant abstraction de la connaissance des puissances des charges pilotées. Ainsi l'invention peut être efficacement mise en oeuvre dans des réseaux électriques n'offrant pas de canaux de transmission dans le sens montant depuis les installations terminales vers le système de pilotage.

La valeur de la puissance prise en compte dans la limitation ou dans la réduction de la puissance consommée par l'au moins une charge dépend des modes de fonctionnements possibles de l'au moins une charge.

Par exemple, dans le cas où l'au moins une charge de puissance n'a que deux modes de fonctionnement, l'arrêt et la marche à sa puissance nominale, la puissance effacée de manière latente ou effective est la puissance nominale de l'au moins une charge. Dans le cas de modes de fonctionnement possibles à plusieurs niveaux de puissance, la puissance effacée de manière latente ou effective est calculée par différence entre la puissance maximale de fonctionnement possible et la puissance limitée ou réduite imposée par la réception de la consigne.

L'invention prévoit que ladite valeur d'une puissance soit obtenue à partir d'une information contenue dans une mémoire du dispositif. Il peut s'agir d'une valeur de puissance nominale inscrite dans la mémoire de programme et dont la précision est suffisante lorsque les tolérances de fabrication des charges de puissance sont suffisamment maitrisées. Cette variante est particulièrement bien adaptée aux cas où les dispositifs selon l'invention et l'au moins une charge pilotée sont associées par construction sous la forme d'un appareil unique. Une variante améliorée en précision de la précédente consiste à inclure une étape d'étalonnage dans le processus de fabrication pour améliorer la précision de la valeur de puissance en mémoire. Par exemple, cette valeur, ou un correctif variable applicable à une valeur standard fixe, est stocké dans une mémoire non volatile telle qu'une eeprom ou dans une zone particulière de la mémoire flash utilisée pour stocker le programme du microcontrôleur. Il est également prévu, en particulier lorsque les dispositifs selon l'invention sont des appareils distincts de l'au moins une charge de puissance à piloter, une étape de paramétrage ou d'apprentissage d'une ou de plusieurs puissances de fonctionnement de l'au moins une charge pilotée lors de l'installation ou au cours du fonctionnement.

Il est aussi prévu que ledit dispositif selon l'invention comprenne en outre des moyens pour communiquer avec le compteur d'énergie électrique de l'installation terminale du réseau électrique derrière lequel le dispositif est raccordé. Le compteur de l'installation électrique comprend un sous-ensemble de métrologie étalonné et approuvé par les autorités pour réaliser des transactions financières. L'utilisation de cet appareil de mesure dans le cadre de la quantification de l'énergie effacée selon l'invention en vue de sa valorisation économique est ainsi particulièrement avantageuse. Une liaison appropriée qui dépend du type de compteur est en outre prévue pour permettre à l'au moins un dispositif selon l'invention de recevoir l'information utile. Il est prévu que la communication entre le compteur et l'au moins un dispositif selon l'invention soit directe ou se fasse par l'intermédiaire d'une passerelle chargée de diffuser l'information à tous les dispositifs de l'installation terminale concernée. L'information issue du compteur pouvant être obtenue par une liaison directe entre le compteur et le dispositif ou par l'intermédiaire de toute passerelle permettant la diffusion de tout ou partie des informations issues du compteur dans l'installation électrique terminale correspondante. Ainsi en France par exemple, tous les compteurs électroniques sont équipés d'une sortie dite « télé-information client » qui est prévue pour être exploitée par des automatismes optionnels dans l'installation électrique terminale. Cette sortie qui a été conçue pour être connectée à l'entrée d'un gestionnaire d'énergie centralisé par des moyens filaires, transmet continument une information composite structurée constituée d'informations élémentaires produites en interne et/ou retransmises par le compteur. Il s'agit par exemple d'un numéro d'identification du compteur, de l'option tarifaire et de l'intensité souscrites, d'informations liées à la période tarifaire en cours ou à venir, d'avertissement de dépassement de la puissance souscrite, de l'intensité instantanée et maximale absorbées par l'installation terminale, de la puissance apparente soutirée et des index de comptage. Il existe d'autres moyens équivalents pour que les compteurs transmettent des informations à des appareillages externes. Par exemple ceux utilisés en Allemagne qui sont basés sur la norme IEC62056-21 exploitant une liaison infrarouge. Il peut s'agir encore d'une connexion USB, d'une connexion filaire ou optique propriétaire, d'une connexion CPL ou radio etc. Il est aussi prévu que le dispositif selon l'invention exploite par le biais d'un détecteur optoélectronique approprié l'information issue de la led qui flashe à chaque wattheure consommé sur la plupart des compteurs électroniques, ou encore qui détecte le passage du marquage visuel sur le disque des compteurs électromécaniques. Le dispositif selon l'invention dans une variante agencée pour mesurer le temps écoulé entre deux flashs de la led, ou le cas échéant, entre deux passages du marquage du disque d'un compteur électromécanique peut calculer la valeur de la puissance consommée dans l'installation. Dans ses versions les plus récentes telles que « Linky » (marque déposée d'ERDF) en France, le compteur de l'installation électrique comprend aussi un sous-ensemble de communication apte à permettre la transmission de la courbe de charge à un système d'information distant. La connaissance de la courbe de charge complète avantageusement l'invention en permettant un contrôle a posteriori de l'effectivité de l'effacement commandé dans chaque installation. Ceci permet par exemple de détecter des fonctionnements en dérogation rendant inopérants des commandes d'effacement ainsi que des fraudes caractérisées à l'effacement. La détection d'anomalies par le biais de la connaissance de la courbe de charge permet le cas échéant au système d'information de corriger des valorisations économiques erronées ou de déclencher toute autre action appropriée. Dans certaine variantes de mise en oeuvre de l'invention, les moyens compris dans le dispositif pour communiquer avec le compteur derrière lequel il est raccordé sont aussi utilisés pour recevoir l'au moins une consigne.

L'invention prévoit aussi que ladite valeur d'une puissance soit obtenue à partir d'au moins une mesure issue du compteur d'énergie électrique derrière lequel il est raccordé dans l'installation électrique terminale. Ainsi les dispositifs selon l'invention qui disposent d'une connexion appropriée avec un compteur d'énergie peuvent avantageusement mettre en oeuvre une étape d'auto-apprentissage exploitant le retour d'information du compteur en réponse au placement de l'au moins une charge dans un ou plusieurs modes de fonctionnement déterminés par le dispositif. Plusieurs cycles de mise en marche ou à l'arrêt sont prévus pour déterminer de manière certaine la ou les puissances de l'au moins une charge de puissance au sein d'une mesure de puissance globale agrégeant les consommations d'une pluralité de charges dans l'installation électrique terminale.

L'invention prévoit aussi que ladite valeur d'une puissance soit obtenue à partir de moyens pour mesurer une puissance électrique compris dans le dispositif. Il est prévu des variantes du dispositif selon l'invention qui comprennent en outre des moyens pour mesurer au moins une valeur de puissance consommée par l'au moins une charge électrique de puissance. Selon la précision nécessaire dans le contexte de mise en oeuvre de l'invention, une simple mesure du courant multipliée par une constante correspondant à la valeur nominale de la tension du réseau, jusqu'à une mesure précise de la puissance utilisant des composants prévus pour la métrologie peuvent convenir.

L'invention prévoit en outre que la durée pendant laquelle la puissance est limitée et/ou réduite tienne compte de la tension du réseau électrique dans ladite installation terminale. La durée effectivement décomptée dudit temps déterminé correspond, pour une puissance donnée, à une quantité d'énergie non consommée de manière latente ou effective. L'invention prévoit de déterminer avec rigueur la durée pendant laquelle l'accès à la puissance est limité et/ou la durée pendant laquelle la puissance consommée par l'au moins une charge est réduite en modulant le comptage du temps proportionnellement à la variation de la tension du réseau autour de sa valeur nominale. Ce raffinement de l'invention produit ses effets même lorsque l'au moins une charge pilotée est à l'arrêt et que le courant par conséquent est nul ainsi que la puissance susceptible d'être mesurée par des moyens classiques.

Il est prévu que le dispositif selon l'invention comprenne en outre des moyens pour communiquer avec au moins un système d'information (externe directement ou indirectement ou interne domotique). Dans certaines variantes de l'invention, la communication entre le dispositif et l'au moins un système d'information est directe par des moyens d'accès à un réseau de communication intégrés dans le dispositif. Dans d'autre variantes, la communication se fait par l'intermédiaire d'un appareil faisant fonction de passerelle entre les moyens de communication embarqués dans le dispositif et les moyens de communication nécessaires pour accéder au réseau permettant d'accéder l'au moins un système d'information. Parmi les appareils faisant fonction de passerelle, il peut s'agir de « box » de tous types mais également d'une variante de dispositif selon l'invention. En effet, lorsqu'un un dispositif selon l'invention comprend des moyens pour communiquer avec un réseau qui sont particulièrement sophistiqués, couteux ou nécessitant par exemple une carte SIM, il est particulièrement avantageux de lui faire jouer un rôle de passerelle pour permettre aux autres dispositifs de la même installation terminale d'accéder également au réseau. Les autres dispositifs n'embarquant alors que des moyens de communication à portée locale plus simples et moins couteux. L'au moins un système d'information concerne le plus souvent des systèmes externes d'opérateurs de services mais il est aussi prévu qu'il s'agisse d'un système d'information propre à l'installation terminale dans laquelle les dispositifs selon l'invention sont installés. Un tel système interne peut être par exemple un système domotique ou un système de gestion de l'énergie sophistiqué tels que ceux qui sont nécessaires en cas de production d'énergie décentralisée. La communication avec l'au moins un système d'information s'entend le plus souvent bidirectionnelle mais l'invention prévoit aussi des variantes qui utilisent des moyens de communication unidirectionnels, au moins dans le cadre des communications entre certains points du système ainsi constitué. L'au moins un système d'information assure par exemple le rapprochement dans une base de données entre un compte client, des ordres d'effacement transmis, horodatés et différenciés le cas échéant entre ordres d'effacement latents et ordres d'effacement effectifs, des quantités d'énergie effacées, le cas échéant différenciées selon leur type latent ou effectif, des montants portés au crédit du compte client qui sont exprimés en unité d'énergie ou en unité monétaire par application d'un modèle économique approprié etc. Il est prévu que l'invention puisse être mise en oeuvre sans voie de communication montante depuis les installations terminales vers les systèmes d'information qui sont en lien avec la gestion ou avec l'administration du réseau électrique. Néanmoins, la présence d'une voie de retour dans le dispositif est avantageuse pour par exemple synchroniser de manière appropriée les consommations dans des installations desservies par les mêmes lignes ou par les mêmes transformateur MT/BT ou pour par exemple rendre le système plus robuste vis-à-vis du risque de surcharge mais aussi vis-à-vis du risque de fraudes par contournement d'effacements comptabilisés. La voie montante, tout comme la voie descendante selon les variantes de mise en oeuvre, peut utiliser des moyens de communication directs comme un modem GSM ou CPL intégré. Elle peut aussi utiliser des moyens indirects en tant que passerelle. De tels moyens sont par exemple une « box énergie », une « box télécom ». Il peut aussi s'agir d'un compteur communicant intégrant non seulement une liaison bidirectionnelle pour communiquer avec les systèmes amont mais aussi une liaison uni ou bidirectionnelle pour communiquer avec les équipements situés en aval dans l'installation.

L'invention prévoit en outre que le dispositif soit agencé pour modifier le pilotage de l'au moins une charge électrique de puissance en fonction d'au moins une information en rapport avec l'état fonctionnel de l'au moins une charge électrique de puissance et/ou de ressources qui lui sont associées. Il est prévu par exemple que la connaissance au moins partielle du cycle de fonctionnement de l'au moins une charge de puissance pilotée par le dispositif selon l'invention et/ou d'au moins une information d'état comme une température et/ou le cas échéant la connaissance de l'état des réserves de moyens de stockage ou de production d'énergie associés à l'au moins une charge pilotée, permette au dispositif d'optimiser son pilotage. L'optimisation du pilotage consiste par exemple à donner un accès prioritaire anticipé à la puissance pour une charge de puissance produisant du froid dont la température dépasse la consigne de température supérieure. Il peut s'agir par exemple de décaler la mise en oeuvre d'un effacement de puissance latent ou effectif à la fin d'un cycle de lavage d'un appareil électroménager ayant commencé avant la réception de l'au moins une consigne ou de mettre en oeuvre l'effacement effectif sous la forme d'un abaissement de la température de lavage etc.

Il est prévu que le dispositif selon l'invention comprenne en outre des moyens pour limiter la puissance consommée dans l'installation électrique terminale par un pilotage approprié de l'au moins une charge électrique de puissance. Il s'agit dans cette variante de gérer l'au moins une charge de puissance de sorte que la puissance globale consommée par l'installation soit maintenue pendant un temps donné en dessous d'une limite. La durée du temps et la valeur de la puissance limite étant déterminées par la réception de l'au moins une consigne selon toutes les variantes de l'invention. Ceci est particulièrement avantageux en ce que l'au moins un système d'information qui pilote l'ensemble du système voit sa gestion de l'effacement simplifiée pour chaque installation électrique terminale concernée. En effet, la limitation de l'accès à la puissance et la réduction effective de la puissance consommée sont gérées de manière consolidée en impliquant toutes les charges, même celles qui ne sont pas pilotées par le dispositif selon l'invention. Le dispositif pilote alors les charges pendant la durée de la limitation de manière dynamique pour maintenir continument la puissance globale sous la limite imposée ce qui implique de possibles actions sur l'état des charges pilotées ayant un effet à la baisse ou à la hausse en fonction de tout événement affectant la consommation globale de l'installation. L'information sur la puissance globale consommée par l'installation terminale est obtenue par exemple en utilisant le compteur d'énergie de l'installation comme décrit précédemment ou en utilisant des moyens de mesure compris dans le dispositif ayant un capteur de courant apte à mesurer le courant circulant dans l'un des deux conducteurs de l'installation monophasée issus du compteur, de préférence le câble de phase. Selon les variantes de mise en oeuvre de l'invention, le dispositif pourra par exemple procéder à des simulations préalables à toute action sur l'au moins une charge en réponse à un dépassement de puissance mesuré. Ces simulations préalables visant à déterminer préalablement quelles sont les l'actions appropriés sur les charges contrôlées pour ne pas dépasser la limite imposée. Une autre variante de mise en oeuvre de l'invention consiste à immédiatement mettre à l'arrêt toutes les charges de puissance contrôlées lorsqu'un dépassement de la puissance autorisée est constaté, puis à remettre en marche chaque charge au niveau de puissance requis pour ne pas dépasser la limite imposée en prenant en compte le cas échéant des règles de priorité dans l'accès à la puissance en fonction des usages ou de l'inertie thermique des appareils, des règles de partage de la puissance résiduelle entre des charges de priorité équivalente. De telles règles de partage sont par exemple par rotation des périodes d'accès à la puissance lorsque les charges n'offrent qu'un mode de fonctionnement à la puissance nominale ou encore par le partage simultané de la puissance disponible lorsque les charges offrent des modes de fonctionnement à puissance réduite.

Il est prévu que le dispositif selon l'invention comprenne en outre des moyens pour transmettre au moins une commande provenant d'un appareil externe à l'au moins une charge de puissance en absence de limitation et/ou de réduction de puissance. Ces moyens sont des interfaces de type entrée destinées à recevoir les sorties d'au moins un appareil de contrôle-commande externe. L'au moins une charge de puissance pilotée par le dispositif est par nature souvent au moins un appareil de chauffage ou de climatisation nécessitant un pilotage par un programmateur, un régulateur thermique, un récepteur de télécommandes ou tout autre système domotique ou de gestion technique du bâtiment. Le dispositif selon l'invention prévoit au moins une entrée à connecter à la sortie d'un appareil de contrôle externe optionnel qui, en l'absence de limitation ou de réduction de puissance selon l'invention, impose l'état de son choix à l'au moins une charge à piloter appropriée. En cas de besoin d'action du dispositif sur l'au moins une charge pilotée dans le cadre de l'invention, le signal issu de l'appareil de contrôle externe est ignoré et le dispositif impose l'état de son choix à l'au moins une charge de puissance de manière inconditionnelle et prioritaire. Les interfaces proposées en entrée sont en général de même nature que les sorties correspondantes pour piloter l'au moins une charge, par exemple de type « fil pilote ». En effet, les appareils de contrôle et l'au moins une charge préexistent et coopèrent fréquemment avant l'installation du dispositif selon l'invention ce qui rend avantageux de pouvoir n'avoir qu'à intercaler le dispositif dans la liaison préexistante pour rendre l'ensemble des équipements interopérables. Cela étant on ne sort pas du cadre de l'invention si les interfaces en entrée et en sortie sont de nature différente et que le dispositif joue un rôle de passerelle assurant la continuité fonctionnelle entre des équipements non directement compatibles.

Il est prévu que le dispositif selon l'invention comprenne en outre des moyens pour permettre à l'utilisateur de déroger à l'effet de la réception de l'au moins une consigne. Il est couramment constaté qu'un système contraignant, même si sa mise en oeuvre donne lieu à des compensations économiques, est d'autant mieux accepté par ses utilisateurs que ces derniers savent qu'ils ont la possibilité d'imposer leur volonté prioritairement aux automatismes. Il est ainsi prévu dans les dispositifs selon l'invention des moyens de commande pour les rendre insensibles aux consignes reçues et/ou pour en annuler l'effet a postériori. L'offre d'un mode de fonctionnement en dérogation est avantageusement complétée par une temporisation ou tout autre moyen permettant d'en sortir automatiquement pour revenir au mode de fonctionnement normal où le dispositif est apte à recevoir l'au moins une consigne selon l'invention. Dans certaines variantes de mise en oeuvre sophistiquées du dispositif selon l'invention, il est prévu de gérer un « forfait dérogation » par exemple exprimé en nombre de consignes d'effacement ignorée par le dispositif dans une période de temps donnée, par exemple 5 autorisations de dérogation au maximum sur 30 jours glissants. A chaque fois que l'utilisateur demande un forçage manuel de l'accès à la puissance, cette action est prise en compte par le dispositif tant que le forfait n'est pas épuisé. Le rechargement du forfait est automatique Ceci permet d'offrir une capacité de dérogation appréciée des utilisateurs tout en limitant les risques d'abus sans pour autant complexifier la gestion au niveau des systèmes d'information impliqués. Il est aussi prévu une variante plus élaborée où l'utilisateur demande à son opérateur une dérogation au moyen par exemple d'une application sur smartphone, tablette ou via un site web, le système d'information en tient compte le cas échéant dans la gestion du compte client associé, et envoie une consigne de désactivation de l'effacement à l'au moins un dispositif concerné de ce client en utilisant le système de transmission descendant ayant une capacité d'adressage individuel utilisé pour transmettre les consignes d'effacement. Dans le cas d'un système de transmission bidirectionnel de bout en bout, la demande de dérogation est avantageusement transmise à partir du dispositif selon l'invention qui peut en outre masquer les temps de latence du système de gestion et de communication aux yeux des utilisateurs en commençant immédiatement à donner l'apparence de l'accès à la puissance par l'activation des fonctions peu consommatrices de puissance mais visibles comme celles relevant de l'interface homme-machine du système selon l'invention. L'accès effectif à la puissance pour l'au moins une charge de puissance concernée est autorisé par le dispositif de manière silencieuse lorsque la consigne appropriée est reçue.

Selon un autre aspect de l'invention, il est prévu un système pour réduire la puissance électrique, susceptible d'être consommée et/ou effectivement consommée, par au moins une charge de puissance dans une installation terminale d'un réseau électrique.

Le système selon l'invention comprend un dispositif de pilotage selon l'invention et au moins une charge électrique de puissance pilotée. Il est prévu que le système prenne la forme d'au moins deux appareils distincts, l'appareil de contrôle que constitue le dispositif de pilotage selon l'invention et au moins un appareil représentant une charge de puissance.

Il est prévu que l'au moins une charge de puissance comprenne au moins une charge de puissance utilisé dans le cadre de la fourniture d'un même service voir à l'intérieur d'un même produit, par exemple le compresseur et la résistance blindée dans un chauffe-eau thermodynamique. Un autre exemple du même type d'au moins une charge de puissance à l'intérieur d'un même appareil pilotable par le dispositif est la résistance plane d'un panneau de chauffage radiant et les résistances blindées pongées dans un matériau à changement de phase d'un bloc de stockage d'énergie thermique à l'intérieur d'un même convecteur à accumulation.

Il est aussi prévu dans une variante de mise en oeuvre préférée de l'invention dans laquelle le dispositif intègre une fonction de pilotage de l'au moins une charge de puissance visant à limiter la puissance totale de l'installation sous un seuil de puissance imposé, pendant un temps donné, par la réception de l'au moins une consigne selon l'invention. Dans cette variante, l'au moins une charge de puissance représente au moins un appareil dont la consommation unitaire est significative, par exemple d'au moins 500W. Il est prévu que le dispositif pilote une pluralité d'appareils de puissance de toutes catégories par des interfaces appropriées en fonction des appareils, par exemple par commutation directe de l'alimentation pour un chauffe-eau électrique, par fil pilote pour des convecteurs électriques, par télécommande radio avec émetteur infrarouge au point de réception etc.

Il est aussi prévu que le système comprenne au moins un appareil intégrant dans la même enveloppe, le dispositif de pilotage selon l'invention et l'au moins une charge électrique de puissance. La liaison fonctionnelle entre le dispositif selon l'invention et l'au moins une charge de puissance est par exemple assurée par le raccordement électrique des fils d'alimentation standards de l'appareil à la sortie du dispositif s'il intègre des moyens de commutation de puissance ou à un relais de puissance externe contrôlé par le dispositif selon l'invention. Par exemple, ce type de liaison fonctionnelle est approprié pour piloter un chauffe-eau électrique par effet Joule ou toute autre charge simple.

La liaison fonctionnelle entre le dispositif et l'au moins une charge de puissance peut aussi reposer sur une liaison de type « fil pilote » qui est particulièrement appropriée dans le cas d'appareils de chauffage électrique ou de climatisation. Il est aussi prévu que la liaison fonctionnelle entre le dispositif de pilotage selon l'invention et la charge pilotée se fasse par l'intermédiaire d'une télécommande par radiofréquence, par CPL ou par infrarouges. Des appareils tels que les climatiseurs intègrent nativement un récepteur de télécommande qu'il est avantageux d'utiliser aussi pour recevoir des commandes transmises par le dispositif selon l'invention. Dans ce cas, l'au moins une charge de puissance est raccordée au réseau d'alimentation électrique par l'intermédiaire d'au moins un récepteur de télécommande, intégré ou non dans la même enveloppe, qui est piloté à distance par le dispositif selon l'invention à l'intérieur du bâtiment. La variante de mise en oeuvre sous la forme d'un dispositif de pilotage séparé est particulièrement appropriée à la rénovation d'une installation existante comprenant déjà des appareils de puissance. La mise en oeuvre sous la forme d'un appareil avec pilotage intégré selon l'invention vise plutôt des nouveaux appareils optimisés pour exploiter au mieux l'invention par exemple en prenant en compte des informations en lien avec le cycle de fonctionnement ou l'état de l'appareil.

Il est prévu que le système selon l'invention forme un appareil de production d'eau chaude sanitaire. Par exemple un chauffe-eau à effet Joule, un chauffe-eau thermodynamique ou un chauffe-eau à source de chaleur mixte.

Il est aussi prévu que le système selon l'invention forme un appareil de chauffage et/ou de refroidissement. Par exemple, une chaudière thermodynamique produisant de la chaleur et de l'eau chaude sanitaire, un convecteur, un climatiseur réversible ou non.

Il est prévu que le système selon l'invention comprenne en outre des moyens pour stocker localement de l'énergie permettant de compenser en tout ou en partie une production insuffisante d'énergie dans le réseau électrique de sorte que le service délivré par l'au moins une charge pilotée ne soit pas perturbé de manière perceptible par les utilisateurs. Ces moyens de stockages sont, selon les variantes de mise en oeuvre de l'invention, intégrés dans la même enveloppe que d'autres composants du système, ou proposés sous forme d'accessoires externes et/ou optionnels. Leur effet principal est de pouvoir allonger les durées d'effacement sans impacter les utilisateurs. Selon le type d'appareil, il peut s'agir par exemple de stockage de chaleur ou de froid dans des matériaux massifs ou à changement de phase, de stockage d'électricité, de stockage mécanique. Il peut s'agir par exemple d'une cuve externe ou intégrée dans l'enveloppe comprenant l'au moins une charge de puissance pilotée, la cuve ayant un volume approprié et contenant de préférence des matériaux à changement de phase aptes à stocker efficacement de la chaleur ou du froid sous forme de chaleur latente. Les moyens de stockage d'énergie locaux, sous forme de charges électriques dans des super-capacités, sous forme chimique dans des accumulateurs ou sous forme mécanique dans des volants d'inertie ou sous forme d'un gaz comprimé, sont aussi prévus avec leur moyens respectifs appropriés pour la restitution de l'énergie stockée.

Il est prévu que le système selon l'invention soit agencé pour recevoir de l'énergie produite par des moyens locaux permettant de compenser en tout ou en partie une production insuffisante d'énergie dans le réseau électrique de sorte que le service délivré par l'au moins une charge pilotée ne soit pas perturbé de manière perceptible par les utilisateurs. Il s'agit par exemple de moyens de production d'énergie thermique tels que des panneaux solaires avec extraction de l'énergie produite par circulation d'un fluide caloporteur, de moyens de production d'énergie électrique tels que des panneaux photovoltaïques ou une éolienne non raccordés au réseau de distribution électrique, ou encore de tels moyens de production d'énergie électrique locaux, raccordable au réseau électrique en temps normal mais automatiquement gérés de sorte à passer en autoproduction locale en cas d'insuffisance de la puissance fournie par le réseau électrique. L'utilisation de tout autre moyen de production ponctuelle d'énergie thermique ou électrique pour compenser en tout ou partie une insuffisance de puissance issue du réseau électrique est prévue dans l'invention.

Selon un autre aspect de l'invention, il est prévu un procédé pour exploiter une pluralité de systèmes selon l'invention dans un réseau électrique.

Le procédé selon l'invention comprend les étapes de :
- Surveillance continue de l'équilibre entre la consommation et la production d'électricité au sein dudit réseau électrique par un système de supervision et de gestion approprié;
- Transmission par ledit système de supervision et de gestion approprié, à une pluralité déterminée de systèmes selon l'invention, d'au moins une consigne pour ajuster la consommation d'électricité à la production en réduisant la demande de puissance électrique dans le cas d'une production déficitaire donnée.

Il est prévu dans une variante particulièrement raffinée du procédé de jouer sur les capacité d'adressage du système de télécommande, et/ou le cas échéant, sur la transmission de consignes différenciées en terme de quantité de puissance à effacer de manière latente ou effective pour s'approcher au plus près de l'équilibre parfait entre consommation et production.

Le procédé selon l'invention comprend en outre l'étape de :
- Mémorisation dans au moins un système d'information, d'au moins une information en rapport avec la transmission par ledit système de supervision et de gestion approprié, à une pluralité déterminée de systèmes selon l'invention, d'au moins une consigne pour ajuster la consommation d'électricité à la production en réduisant la demande de puissance électrique.

Le procédé selon l'invention prévoit par exemple la mémorisation dans une base de données, de l'identification des installations comprenant au moins un système selon l'invention auxquels les consignes sont transmises, des quantités prédéterminées d'énergie électrique associées aux consignes, du nombre de systèmes selon l'invention compris dans chaque installation et, le cas échéant, de leurs puissances nominales respectives, ainsi que de l'horodatage de la transmission des consignes. Tout ou partie de ces informations permettent que des comptabilisations appropriées et, le cas échéant, des compensations entre des opérateurs impliqués, soient réalisées en temps utile en application de règles de valorisation économiques, et le cas échéant de règles contractuelles, données. La mémorisation de ces informations offre en outre une traçabilité des actions réalisées.

Le procédé selon l'invention comprend en outre l'étape de :
- Comptabilisation dans au moins un système d'information, de la quantité d'énergie dont la consommation a été évitée dans une installation où au moins un système selon l'invention est mis en oeuvre.

Le procédé selon l'invention prévoit par exemple que des comptabilisations appropriées et, le cas échéant, des compensations entre une pluralité d'opérateurs impliqués, soient réalisées dans l'au moins un système d'information mis en oeuvre. La comptabilisation de la quantité d'énergie dont la consommation a été évitée est à la base de l'application des modèles économiques ou de la mise en oeuvre des contraintes réglementaires applicables dans des logiciels appropriés dans le cadre d'une gestion automatique ou semi-automatique du réseau électrique impliquant une pluralité de parties prenantes.

Le procédé selon l'invention comprend en outre l'étape de :
- Comptabilisation différenciée, dans l'au moins un système d'information, de la quantité d'énergie dont la consommation a été évitée, selon que l'au moins une charge électrique de puissance pilotée est en marche ou à l'arrêt lorsque l'au moins une consigne est reçue par le dispositif la pilotant.

Le procédé selon l'invention prévoit ainsi la possibilité d'appliquer des valeurs différentes de valorisation économique des quantités d'énergie effacées et, le cas échéant, d'utiliser des modèles économiques distincts et/ou d'appliquer des contraintes réglementaires distinctes, selon que l'effacement des consommations selon l'invention est latent ou effectif.

Le procédé selon l'invention comprend en outre l'étape de :
- Demande de dérogation.

Cette étape est avantageusement mise en oeuvre dans l'invention pour renforcer l'attractivité d'une offre de service en rapport avec l'effacement d'énergie. Dans le cas où l'accès à la puissance a été limité ou que la puissance consommée par un système selon l'invention a été réduite, la mise en oeuvre de cette étape consiste pour l'utilisateur à formuler une demande de dérogation globale ou ciblant un ou plusieurs système selon l'invention par tout moyen mis à sa disposition. Par exemple dans certaine variantes de mise en oeuvre, cette demande dérogation est proposée par une action physique sur le système ou le dispositif concerné. Dans d'autres variantes de mise en oeuvre, la demande de dérogation peut être transmise à l'au moins un système d'information apte à la prendre en charge par l'intermédiaire d'une application exécutée par un smartphone, une phablet ou une tablette ou encore par l'intermédiaire d'un portail web approprié accessible par tout moyen standard. L'identification des appareils concernés peut le cas échant avantageusement utiliser des moyens tels qu'une étiquette NFC ou portant un code barre, l'étiquette étant solidaire d'un système selon l'invention et pouvant être lue notamment par un smartphone, une phablet ou une tablette. Des variantes reposant sur la connexion à un serveur apte à reconnaitre directement des demandes vocales sont aussi prévues. L'utilisation de moyens comme les smartphones ou équivalents sont particulièrement avantageux en ce qu'il permettent d'accéder directement au système d'information concerné, d'identifier voir d'authentifier directement l'utilisateur, de le rapprocher automatiquement de son compte client, d'agir le cas échéant de manière appropriée sur au moins l'un de ses comptes et pour agir in fine sur les systèmes selon l'invention afin d'annuler ou de reporter l'effet de la réception de l'au moins une consigne. L'utilisation de moyens relevant des techniques de l'information et de la communication permet de réduire la bande passante utilisée et, le cas échéant, de n'utiliser qu'une voie de transmission descendante entre l'au moins un système d'information concerné et l'installation terminale du client.

Il est prévu d'appliquer le procédé selon l'invention pour la gestion d'un réseau de distribution d'énergie électrique comprenant des sources d'énergie à production intermittente dont les contributions sont impossibles à planifier de manière certaine telles que des éoliennes, des panneaux photovoltaïques, des centrales solaires où l'électricité est produite par des moyens de type thermodynamique etc.

Il est prévu d'appliquer le procédé selon l'invention dans le cadre d'un service de gestion de la réduction de la consommation d'énergie électrique.

Ce service pouvant par exemple prendre la forme d'un service d'agrégation d'effacements d'énergie électrique en cas de déficit de production ou d'incident dans le réseau. Il s'agit d'organiser et de gérer une capacité d'effacement comprenant une pluralité de systèmes selon l'invention, de l'exploiter en mettant en oeuvre le procédé selon l'invention en vue de compenser des déficits de production susceptibles de déséquilibrer un réseau d'électricité pour revendre l'énergie dont la production à été évitée à un gestionnaire de réseau.

Il est prévu d'appliquer le procédé selon l'invention en complément d'un service de fourniture d'eau chaude sanitaire et/ou de chauffage et/ou de refroidissement et/ou de fourniture d'électricité. Il s'agit par exemple pour un fournisseur de services tels que l'installation et la maintenance d'équipements thermiques ou de production énergétique individuels ou collectifs, dans le cadre de contrats de location à des utilisateur finaux, d'exploiter en outre le parc d'équipements ainsi constitué pour générer des revenus supplémentaires en vendant des prestations d'effacement consolidé basées sur l'agrégation d'effacements diffus à des entités qui sont partie à la gestion du réseau électrique.

Il est prévu de mettre en oeuvre l'invention dans des locaux domestiques, professionnels ou industriels sous la forme d'équipements individuels ou collectifs.

### Brève description des dessins

D'autres avantages et caractéristiques de l'invention apparaîtront à l'examen de la description détaillée de modes de mise en oeuvre nullement limitatifs, et des dessins annexés où :
La figure 1 illustre une première variante de schéma bloc du dispositif.
La figure 2 illustre une seconde variante de schéma bloc du dispositif.
La figure 3 illustre une première variante du système en éléments séparés.
La figure 4 illustre une seconde variante du système en éléments séparés.
La figure 5 illustre une troisième variante du système en éléments séparés.
La figure 6 illustre une quatrième variante du système en éléments séparés.
La figure 7 illustre une première variante intégrée du système.
La figure 8 illustre une seconde variante intégrée du système.
La figure 9 illustre une troisième variante intégrée du système.
La figure 10 illustre une quatrième variante intégrée du système.
La figure 11 illustre un exemple de mise en oeuvre de l'invention.
La figure 12 illustre les étapes du procédé en lien avec l'équilibre du réseau.
La figure 13 illustre les étapes du procédé en lien avec la valorisation.

### Description détaillée des figures et des modes de réalisation

D'autres particularités et avantages de l'invention apparaîtront encore dans la description ci-après. Aux dessins annexés donnés à titre d'exemples non limitatifs :

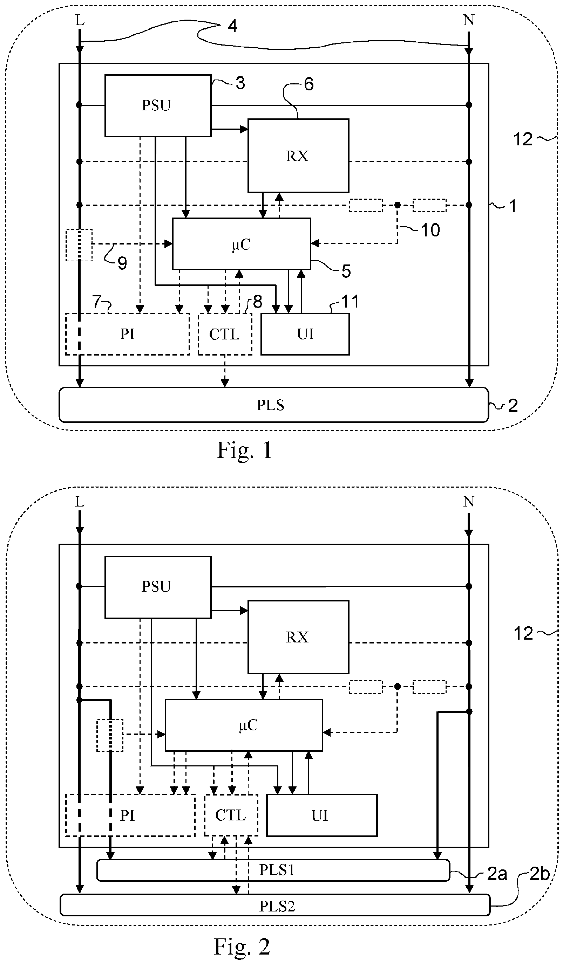

La **figure 1** illustre une première variante de schéma bloc du système.
Le schéma bloc d'un système 12 comprend un dispositif 1 selon l'invention pour piloter au moins une charge électrique de puissance 2. Le dispositif 1 comprend, un sous-ensemble d'alimentation basse tension 3 fournissant les tensions nécessaires au fonctionnement des autres sous-ensembles à partir de la tension de l'installation électrique 4 à laquelle il est connecté. Au coeur du dispositif se trouve le microcontrôleur 5 qui gère les ressources du dispositif au moyen d'un logiciel contenu dans sa mémoire de programme, d'une mémoire RAM de travail et d'une mémoire non volatile destinée au stockage permanent de paramètres de fonctionnement et le cas échéant d'états fonctionnels. Des modèles de la famille de microcontrôleurs 8bit AVR « tiny » d'Atmel (marques déposées), ou des modèles de la famille de microcontrôleurs 16bit « MSP430 » de Texas Instrument (marques déposées), sont particulièrement appropriés mais de nombreuses autres références utilisables existent aussi chez d'autres fabricants de semiconducteurs. Un sous-ensemble de communication 6 assure au moins la réception de la consigne dont la réception déclenche la fourniture d'une quantité prédéterminée d'énergie électrique. L'utilisation de tous types de support physique et de protocole de communication étant prévue dans le cadre de l'invention. Il est aussi prévu d'utiliser un transmetteur apte à recevoir et à émettre des informations pour rendre le dispositif compatible avec certains standards télécom requérant des échanges bidirectionnels. Lorsque l'au moins une charge électrique de puissance 2 est une charge électrique ne comprenant pas de moyens commutation de puissance ou ne comprenant pas d'interface permettant au dispositif 1 de la télécommander, alors des moyens de commutation sont intégrés dans une interface de puissance 7. L'interface de puissance 7 comprend par exemple au moins un relais de puissance électromécanique ou statique et son électronique de commande. Dans le cas contraire, la puissance issue du réseau électrique, via le cas échéant des moyens de mesure du courant, est fournie directement à l'au moins une charge de puissance 2. Il est aussi prévu que l'au moins un sous-ensemble de puissance piloté soit télécommandé par le dispositif par l'intermédiaire de tout moyen de contrôle usuel 8 de type unidirectionnel ou bidirectionnel. Les moyens de contrôle 8 communiquent avec l'au moins une charge de puissance 2 par exemple par « fil pilote », par courants porteurs, par radiofréquence, par infrarouge ou par tous moyens filaires. Ceci permet d'utiliser des moyens de commutation de puissance externes au dispositif qui sont déjà mis en oeuvre dans des appareils pilotés, par exemple pour gérer l'au moins une charge électrique de puissance 2 ou pour réguler sa température. En outre, lorsque le dispositif selon l'invention ne comprend pas de moyens pour mesurer la puissance électrique fournie, il est prévu d'acquérir un signal en relation avec la tension d'alimentation de la charge de puissance. Ce raffinement permet de moduler le calcul du temps déterminant la quantité d'énergie effacée en fonction des variations de la tension du réseau électrique autour de sa valeur nominale qui est de 230 V en Europe et de 110 V en Amérique du Nord. La modulation du calcul du temps est par exemple l'application de la même loi de proportionnalité sur la base de temps de la temporisation centrée sur sa valeur nominale que celle mesurée sur la tension du réseau électrique centrée sur sa valeur nominale. Il est également prévu par exemple que la correction soit faite à partir de tables de valeurs stockées dans une mémoire. Ainsi la quantité d'énergie effacée est plus rigoureusement calculée en tenant compte des conditions réelles d'alimentation électrique comme ce serait le cas dans le cadre inverse de la fourniture d'une quantité prédéterminée d'énergie.

Selon les variantes mises en oeuvre pour estimer ou pour mesurer la puissance de l'au moins une charge de puissance 2 dans un ou plusieurs modes de fonctionnement pour pouvoir ultérieurement quantifier l'effacement réalisé selon l'invention, le dispositif comprend des moyens 9 pour connaitre le courant circulant dans l'au moins une charge électrique de puissance 2 et/ou des moyens 10 pour connaitre sa tension d'alimentation. Selon les cas de mise en oeuvre, les moyens 10 prélèvent l'information de tension à l'endroit le plus pertinent. Par exemple au niveau de l'alimentation générale issue de l'installation électrique 4 comme dans la figure 1 ou directement aux bornes des charges de puissance à l'intérieur du bloc 2.

Dans le schéma de la figure 1, le même microcontrôleur 5 est prévu pour mettre en oeuvre tous les aspects de l'invention y compris pour mesurer la puissance consommée par l'au moins une charge électrique de puissance 2 le cas échéant. Bien entendu l'homme du métier comprendra que toutes les solutions bien connues pour mesurer une puissance ou l'énergie électrique reposant ou non sur l'utilisation de circuits intégrés externes spécialisés pour la métrologie, utilisant par exemple pour la mesure du courant un shunt, un transformateur de courant, un capteur à effet hall, à effet Néel, une sonde à enroulement de Rogowski sont aussi utilisables sans sortir du cadre de l'invention.

Une interface utilisateur 11 comprenant au moins un bouton poussoir et un voyant lumineux permet les interactions entre le dispositif et l'utilisateur. Le cas échéant, l'interface utilisateur comprend les commandes appropriées pour offrir à l'utilisateur la possibilité de déroger aux automatismes par exemple en forçant manuellement l'accès à la puissance et en rendant le dispositif insensible aux éventuelles consignes d'effacement pendant un temps déterminé.

Lorsque les systèmes selon l'invention comprennent des moyens de stockage de l'énergie, des moyens de mesure de type « jauge » pour connaitre la quantité relative d'énergie stockée permettent au dispositif selon l'invention de gérer plus finement l'effacement dans le but de le rendre le moins perceptible possible par l'utilisateur. L'information issue de la « jauge » peut aussi avantageusement être mise à la disposition de l'utilisateur par tout moyen d'affichage pertinent.

La **figure 2** illustre une seconde variante de schéma bloc du système.
Cette figure diffère de la précédente en ce qu'elle comprend deux au moins une charge électrique de puissance 2a et 2b gérées séparément. Cette variante correspond au cas d'un système 12 selon l'invention formant un appareil qui par exemple est agencé pour offrir des capacités de stockage d'énergie dans un premier mode de consommation et un fonctionnement traditionnel dans un second mode de consommation. Le dispositif selon l'invention gère la réception d'une consigne d'effacement en impliquant un groupe de charges ou les deux en fonction par exemple d'un choix de mise en oeuvre de l'invention, de la quantité de puissance à effacer, de la quantité d'énergie en stock dans le système au moment ou la consigne est reçue, d'une température, de l'impact de l'effacement sur l'utilisateur etc.

Ce schéma bloc correspond par exemple à un appareil de chauffage ou de climatisation comprenant un sous-ensemble de transformation avec stockage d'énergie plus un sous-ensemble traditionnel de fourniture immédiate de chaleur ou de froid sans stockage. Par exemple un convecteur disposant d'un panneau radiant traditionnel à action immédiate auquel une capacité d'accumulation est ajoutée pour une utilisation de la chaleur stockée en temps différé. Un autre exemple est un climatiseur contenant dans le même appareil un sous-ensemble apte à fournir un service immédiat par des moyens de type thermodynamique à haute efficacité énergétique et un sous-ensemble de stockage thermique de chaleur et/ou de froid. Il est aussi prévu que tout ou partie des sous-ensembles de puissance, en particulier celui qui est destiné à fournir un service immédiat, soit télécommandé par le dispositif par l'intermédiaire de tout moyen usuel, par exemple par « fil pilote » ou par des moyens de télécommande sans fils.

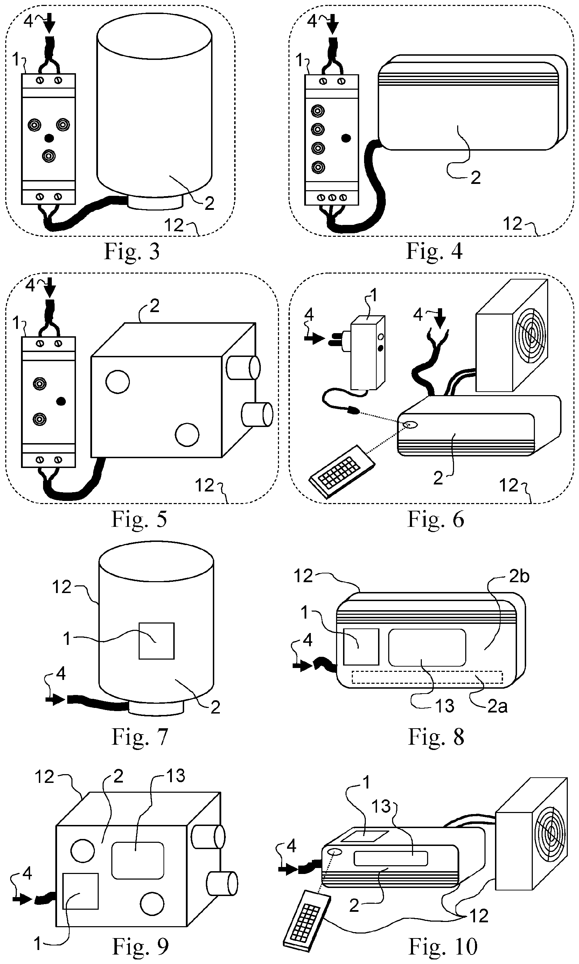

La **figure 3** illustre une première variante du système en éléments séparés.
Le système selon l'invention 12 est mis en oeuvre sous forme de deux appareils séparés, le dispositif selon l'invention 1 et l'au moins une charge électrique de puissance 2. Le système selon l'invention dans cet exemple forme un système de production d'eau chaude sanitaire à accumulation. Le dispositif selon l'invention 1 est connecté au réseau électrique 4 et à l'au moins une charge électrique de puissance 2. L'au moins une charge électrique de puissance 2 comprend dans cet exemple une résistance électrique ou des moyens de chauffage de type thermodynamique et un thermostat de régulation de la température de l'eau ainsi que, le cas échéant un thermostat de sécurité séparé. Cet appareil comprend par nature des moyens pour stocker localement de l'énergie, en l'espèce sous forme de chaleur, permettant de compenser en tout ou en partie une production insuffisante d'énergie dans le réseau électrique à un moment donné. Les moyens pour stocker localement de l'énergie, en l'espèce sous forme de chaleur, sont dans cet exemple une cuve comprenant un volume d'eau.

La **figure 4** illustre une seconde variante du système en éléments séparés.
Le système selon l'invention 12 est mis en oeuvre sous forme de deux appareils séparés 1, 2. Le système selon l'invention dans cet exemple forme un appareil de chauffage électrique. Le dispositif selon l'invention 1 connecté au réseau électrique 4 et l'au moins une charge électrique de puissance 2. L'au moins une charge électrique de puissance 2 comprend dans cet exemple une résistance électrique et un thermostat de régulation de la température ainsi que, le cas échéant, un thermostat de sécurité séparé.

La **figure 5** illustre une troisième variante du système en éléments séparés.
Le système selon l'invention 12 est mis en oeuvre sous forme de deux appareils séparés 1, 2. Le système selon l'invention dans cet exemple forme un système de ventilation mécanique contrôlée de type « à insufflation » ou « à double flux ». Ces systèmes de ventilation actifs destinés au renouvellement de l'air intérieur des bâtiments sont caractérisés en ce que de l'air neuf est aspiré à l'extérieur et distribué à l'intérieur des locaux. Ces systèmes de ventilation comprennent des moyens électriques pour chauffer ou pour préchauffer l'air distribué dans les locaux. Le dispositif selon l'invention 1 connecté au réseau électrique 4 et l'au moins une charge électrique de puissance 2. Le sous-ensemble 2 comprend dans cet exemple une résistance électrique et un thermostat de régulation de la température ainsi que, le cas échéant, un thermostat de sécurité séparé.

La **figure 6** illustre une quatrième variante du système en éléments séparés.
Le système selon l'invention 12 est mis en oeuvre sous forme de deux appareils séparés 1, 2. Le système selon l'invention dans cet exemple forme un système de climatisation selon les deux variantes, rafraichissement seul et réversible. Dans cet exemple de mise en oeuvre, l'invention exploite la capacité de la charge à être télécommandée par signaux infrarouges pour simplifier la connexion fonctionnelle entre le dispositif 1 et l'au moins une charge électrique de puissance 2. L'au moins une charge électrique de puissance 2 comprend dans cet exemple un groupe compresseur, un sous-ensemble de contrôle et de régulation télécommandable par signaux infrarouges. Le dispositif selon l'invention 1 et l'au moins une charge de puissance 2 sont connectés séparément au réseau électrique 4. Le dispositif 1 est proposé sous la forme d'un boitier-prise disposant d'un émetteur de signaux infrarouges. L'émetteur de signaux infrarouges selon les variantes de mise en oeuvre est intégré dans le boitier sous la forme d'un projecteur multidirectionnel de forte puissance (« IR blaster » en langue anglaise) ou sous la forme d'une extension filaire comprenant un émetteur de signaux infrarouge à orienter dans la direction appropriée pour atteindre le récepteur en voie directe ou par réflexion.

La **figure 7** illustre une première variante intégrée du système.
Cet exemple de système selon l'invention 12 diffère de celui de la figure 3 en ce qu'il prend la forme d'un appareil unique selon l'invention, en l'espèce un appareil de production d'eau chaude sanitaire à accumulation, au sein duquel le dispositif 1 et l'au moins une charge électrique de puissance 2 sont intégrés dans la même enveloppe. L'appareil 12 est directement connecté au réseau électrique 4.

La **figure 8** illustre une première variante intégrée du système.
Cet exemple de système selon l'invention 12 diffère de celui de la figure 4 en ce qu'il comprend des moyens pour stocker localement de l'énergie 13 et prend la forme d'un appareil unique selon l'invention, en l'espèce un appareil de chauffage à accumulation ou mixte, c'est à dire à accumulation et à chauffage immédiat. L'appareil 12 est directement connecté au réseau électrique 4, il comprend en son sein le dispositif 1 et l'au moins une charge électrique de puissance sous la forme de deux groupes distincts de résistances chauffantes 2a, 2b gérés séparément par le dispositif 1 embarqué. Dans cette variante coexistent un sous-ensemble de chauffage à effet immédiat 2b, par exemple par convection, par panneau résistif radiant ou par infrarouges et un sous-ensemble de production de chaleur à accumulation 2a.

Les moyens pour stocker localement de l'énergie 13, en l'espèce sous forme de chaleur, sont ici un volume de matériau massif et/ou à changement de phase compris dans une enveloppe appropriée et complété par des moyens pour extraire et restituer la chaleur stockée.

La **figure 9** illustre une première variante intégrée du système.
Cet exemple de système selon l'invention 12 diffère de celui de la figure 5 en ce qu'il prend la forme d'un appareil unique selon l'invention, en l'espèce un appareil de ventilation mécanique centralisée comprenant des moyens de chauffage et des moyens pour stocker localement de l'énergie 13 sous forme de chaleur. Le dispositif 1, l'au moins une charge électrique de puissance 2 et les moyens pour stocker localement de l'énergie 13 sont intégrés dans la même enveloppe, l'appareil ainsi formé 12 étant raccordé au réseau électrique 4.

La **figure 10** illustre une première variante intégrée du système.
Cet exemple de système selon l'invention 12 diffère de celui de la figure 6 en ce qu'il prend la forme d'un appareil unique selon l'invention, en l'espèce un appareil de climatisation à accumulation de froid et/ou de chaleur. Le dispositif 1, l'au moins une charge électrique de puissance 2 et les moyens pour stocker localement de l'énergie 13 sont intégrés dans la même enveloppe, l'appareil ainsi formé 12 étant raccordé au réseau électrique 4.

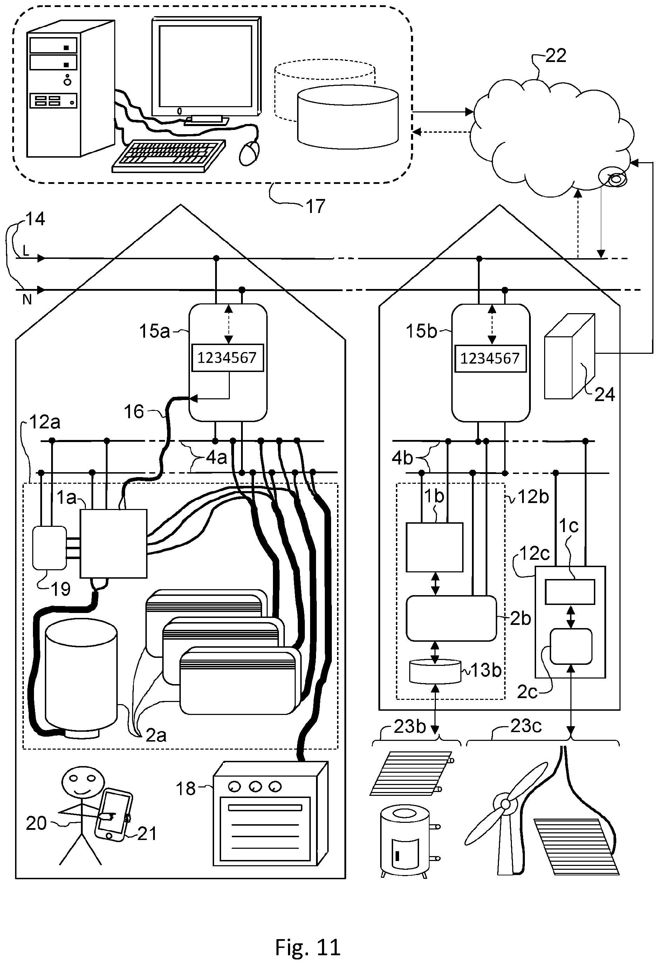

La **figure 11** illustre un exemple de mise en oeuvre de l'invention.
Cet exemple illustre la mise en oeuvre de l'invention dans un réseau électrique 14 desservant une pluralité d'installations terminales 4a, 4b. Les compteurs 15a, 15b délimitent les parties amont et aval du réseau électrique. L'installation électrique terminale 4a comprend un dispositif 1a dans une variante particulièrement préférée. Cet exemple vise un appareil adapté aux spécificités techniques du réseau de distribution électrique français, l'homme du métier saura adapter ces solutions aux spécificités des réseaux électriques d'autres pays. Le dispositif 1a comprend des moyens pour recevoir, décoder et interpréter un flux d'information composite standardisé fourni par le compteur électronique au moyen d'une liaison appropriée 16. Cette interface est la sortie dite « télé-information client » qui est disponible sur tous les compteurs électroniques. Il s'agit d'une liaison bifilaire ou l'information est organisée en trames cycliques et codée à partir d'une modulation en ASK d'une porteuse à 50 kHz. Le dispositif 1a comprend en outre des moyens pour recevoir directement des ordres de télécommande de type TCFM qui sont transmis par courants porteurs à très bas débit en utilisant une fréquence porteuse de 175 Hz. Le dispositif 1a comprend aussi des moyens pour décoder l'information reçue par la sortie dite « télé-information client » du compteur selon le procédé décrit dans le brevet FR1301944 pour acheminer des télécommandes spécifiques depuis le système d'information de gestion du réseau électrique jusqu'aux installations terminales destinataires en n'utilisant que des moyens standards conformes à leurs spécifications d'origine. Ainsi équipé, le dispositif 1a peut être installé sur tout le territoire, à la fois dans des zones où les solutions de type TCFM sont utilisées pour la gestion tarifaire et dans les zones où les solutions de type « Linky » (marque déposée d'ERDF) les auront remplacées. Le dispositif 1a comprend des moyens pour piloter l'au moins une charge de puissance 2a qui dans cet exemple de mise en oeuvre est une pluralité d'appareils dont la puissance unitaire est supérieure ou égale à 500 W. Le dispositif 1a comprend des interfaces adaptées aux appareils à piloter. Cette variante du dispositif selon l'invention visant particulièrement les installations où l'eau chaude sanitaire et le chauffage sont produits par l'énergie électrique, le dispositif comprend un relais pour piloter l'alimentation du chauffe-eau électrique et plusieurs sorties de type « fil pilote » pour piloter des convecteurs électriques standards. Plus le nombre de charges pouvant être pilotées de individuellement est élevé, plus fin est le réglage et grandes sont les possibilités de se rapprocher de la puissance limite et ainsi moins l'utilisateur est impacté par l'effacement. Au delà de 5 sorties, des solutions de pilotage des charges de puissance par bus, par liaison radio ou CPL sont préférées pour augmenter le nombre de charges pilotables individuellement sans complexifier l'installation. La variante 1a comprend en outre des moyens pour limiter la puissance consommée dans l'installation électrique terminale par un pilotage approprié de l'au moins une charge électrique de puissance. Ces moyens sont activés par le dispositif pendant un temps donné et avec une puissance limite à ne pas dépasser donnée lorsque l'au moins une consigne selon l'invention est reçue. En temps normal, la consommation de l'ensemble des appareils de l'installation terminale 4a s'inscrit dans les limites déterminées par le contrat de fourniture de l'opérateur et suit les dispositions récurrentes prévues dans les conditions tarifaires souscrites. Les mêmes moyens que ceux mis en oeuvre pour limiter ou réduire la puissance consommée par une installation électrique sont en effet aptes à être utilisés en conditions normales, c'est-à-dire en l'absence d'effacement selon l'invention, pour piloter les appareils selon les modalités prévues dans l'offre tarifaire souscrite. Par exemple pour piloter l'au moins une charge dans des conditions avantageuse pour le client en fonction des paliers tarifaires et des périodes tarifaires telles que par exemple les heures creuses et les heures pleines, et les pointes mobiles le cas échéant. Lorsque l'au moins une consigne selon l'invention est reçue par le dispositif 1a, alors ce dernier modifie ses paramètre de fonctionnement pour limiter la puissance maximale consommée par l'installation en fonction de la nouvelle valeur imposée par l'au moins une consigne pendant un temps, lui même déterminé, avant de revenir automatiquement aux conditions initiales du contrat lorsque ce temps est écoulé. L'un des avantages de l'invention est de simplifier la gestion de l'effacement pour les opérateurs de services impliques. Ainsi, l'au moins une consigne selon l'invention est avantageusement associée à des commandes impliquant des traitements informatiques simples dans les systèmes d'information des gestionnaires 17. Par exemple, une commande dont la signification est pour le système émetteur et pour les dispositifs récepteurs, « limiter pendant 10 minutes la consommation de l'installation terminale à 50% de l'intensité souscrite ». Une consigne de ce type, qui est relative en termes de puissance ou d'intensité, est simple à traiter dans le système d'information du gestionnaire qui possède tous les attributs du contrat lié à l'installation dans sa base de données et peut ainsi faire tous les calculs nécessaires à la conduite du réseau, en estimant par avance la puissance cumulée dégagée par l'effacement des consommations des installations destinataires pressenties avant de transmettre les consignes. L'opérateur de services concerné peut aussi simplement créditer le compte de son client en fonction du modèle de rétribution associé à l'effacement, connaissant la consigne transmise, l'horodatage de sa transmission et l'intensité souscrite par le client. L'exploitation d'une telle consigne par le dispositif est aussi très simple, une temporisation est activée à sa réception, dont le décompte peut avantageusement être modulé en fonction de la variation de la tension du réseau autour de sa valeur nominale et les moyens pour limiter la puissance dans l'installation sont mis en oeuvre avec la nouvelle valeur de puissance ou d'intensité maximum à ne pas dépasser. Cette information est calculée à partir de l'intensité souscrite qui est communiquée par le compteur au dispositif. De même, le compteur communique au dispositif l'intensité instantanée continument mise à jour. Il est prévu dans l'invention de travailler indifféremment à partir des intensités et/ou des puissances. Lorsqu'il est nécessaire de passer d'une grandeur à l'autre, selon le contexte, la puissance étant le produit de l'intensité par la tension pour des grandeurs de même nature (efficace, apparente etc.), le coefficient approprié sera utilisé. Par exemple la valeur de la tension efficace mesurée par le compteur ou par le dispositif, la valeur nominale de la tension du réseau ou une autre valeur de constante. D'autres types de consigne sont prévues dans le cadre de l'invention, par exemple « limiter l'accès à la puissance à raison de X kWh » (l'arbitrage sur la durée du temps d'effacement et sur la puissance à effacer étant laissé à la discrétion du dispositif et à un éventuel choix de l'utilisateur), « limiter l'accès à la puissance pendant X minutes à raison de Y kWh » etc. Quantifier indirectement la puissance ou l'intensité à réduire en unité d'énergie facilite encore plus les calculs de valorisation des gestionnaires et des opérateurs en ce qu'ils peuvent faire une abstraction complète des caractéristiques techniques de l'installation et des charges qu'elle contient. Avec des consignes exprimées en unité d'énergie, il revient au dispositif de calculer la durée du temps d'effacement, s'il n'est pas défini directement par la consigne ou par la valeur d'un paramètre associé. Il revient aussi au dispositif de calculer la valeur de la puissance limite imposée par la réception de la consigne à partir des informations dont il dispose.

La limitation de la puissance consommée dans l'installation à la valeur imposée par la réception de l'au moins une consigne pendant les périodes d'effacement ou à la puissance souscrite en usage normal, repose sur des mécanismes de mises en marche et d'arrêt appropriés de chaque charge pouvant être contrôlée par le dispositif. Ainsi en cas de dépassement de la valeur limite constatée dans les informations reçues du compteur, la différence entre la valeur limite à ne pas dépasser et la valeur courante est calculée. Tout ou partie des appareils pilotés par le dispositif sont mis à l'arrêt, ou le cas échant laissés en fonctionnement mais à une puissance réduite pour amener la consommation globale de l'installation en dessous de la limite imposée. L'invention prévoit de nombreux raffinements et stratégies de pilotage des charges visant à optimiser le service rendu à l'utilisateur pour rendre la réduction de puissance la moins gênante possible pour ce dernier.

L'invention, bien que contrôlant dans la plupart des cas un nombre limité de charges de puissance offre néanmoins une large dynamique de réglage vis-à-vis des dépassements de consommation causés par la mise en marche de charges non contrôlées mais néanmoins impliquées dans la consommation générale de l'installation. Un dispositif selon l'invention est avantageux pour l'utilisateur même en dehors de la problématique de l'effacement de consommation en ce qu'il permet de réduire au strict nécessaire la puissance souscrite d'au moins une tranche de 3 kW voir de deux dans une installation résidentielle sans réduction notable du confort. Ceci s'explique par le fait qu'il n'est plus nécessaire d'appliquer des coefficients de sécurité pour éviter les disjonctions intempestives par dépassement de l'intensité souscrite. Par exemple, de ce soit en période normale ou après réception d'une consigne selon l'invention ayant pour effet de réduire la puissance maximale autorisée dans l'installation, lorsque la mise en marche du four 18 dans l'installation 4a provoque le dépassement de la puissance maximale autorisée, le dispositif rétablit automatiquement la situation en mettant à l'arrêt des appareils ou en réduisant leur puissance de fonctionnement autant que nécessaire. En pratique, pour réduire les risques de disjonctions dans les installations fortement chargées au regard de l'intensité souscrite, le dispositif renforcera l'impact de ses action en commençant par mettre à l'arrêt instantanément toutes les charges contrôlées dès le dépassement constaté puis remettra en marche progressivement les charges qui peuvent l'être à leur puissance optimale, de préférence en fonction de priorités naturelles en fonction des usages ou de l'inertie des appareils puis partagera la capacité restante, le cas échéant, au dernier niveau de priorité en mettant en oeuvre des rotations ou des réductions de puissances appropriées.

Le dispositif 1a comprend aussi une interface destiné à être connectée à un ou plusieurs appareils de gestion, de télécommande ou de programmation amont 19 dont les ordres à l'au moins une charge de puissance contrôlées par le dispositif doivent être transmis en situation normale et préemptés par le dispositif en cas de dépassement de puissance nécessitant sa prise de contrôle prioritaire. Dans l'exemple du dispositif 1a, il y aura autant d'entrées de type « fil pilote » que de sorties correspondantes. La continuité fonctionnelle entre chaque entrée et la sortie correspondante est assurée en fonctionnement normal. Le dispositif prend le contrôle des sorties pertinentes pour agir prioritairement de manière appropriée sur les charges de puissance en cas de dépassement de la limite de puissance imposée ou le cas échéant en situation normale dans le cas d'une action prioritaire pertinente au regard des conditions souscrites, par exemple mise forcée en mode hors-gel ou en mode économique lors des pointes mobiles ou en « jours rouges » du tarif Tempo (marque déposée d'EDF).

L'utilisateur 20 peut utiliser tout moyen de communication à sa disposition, comme un smartphone, une phablet ou une tablette 21 connecté directement à Internet 22 via un réseau cellulaire ou indirectement via une « box » par WiFi, pour demander à l'au moins un système d'information concerné 17 à déroger à l'effet d'une consigne selon l'invention reçue. Dans cet exemple, la consigne résultante ayant pour effet l'annulation de l'effacement est transmise en retour par le même canal que celui utilisé pour transmettre l'au moins une consigne selon l'invention.

L'installation terminale 4b comprend deux systèmes selon l'invention 12b et 12c. Le système 12b comprend, sous la forme de deux appareils distincts, le dispositif selon l'invention 1b qui pilote l'au moins une charge de puissance 2b par l'intermédiaire d'une interface de contrôle appropriée. Le système 12b comprend en outre des moyens de stockage thermiques 13b qui permettent d'allonger la durée d'effacement sans perturber les utilisateurs. Les moyens de stockage thermiques 13b permettent en outre de bénéficier de l'apport d'énergie de moyens de production d'énergie locaux 23b dont l'apport réduit le besoin de soutirage de puissance électrique sur le réseau. Dans cet exemple les moyens de production d'énergie locaux sont de type thermique, l'énergie qu'ils produisent est extraite, transportée puis transférée dans les moyens de stockage 13b par circulation d'un fluide caloporteur géré de manière appropriée en fonction des particularités du système et de son installation.

Le système 12c comprend dans la même enveloppe, sous la forme d'un appareil unique pouvant former par exemple une chaudière électrique thermodynamique, le dispositif selon l'invention 1c et l'au moins une charge de puissance 2c. Le système 12c bénéficie en outre de l'apport d'énergie de moyens de production locaux 23c dont l'apport réduit le besoin de soutirage de puissance électrique sur le réseau. Dans cet exemple les moyens de production d'énergie locaux sont de type électrique fonctionnant en autoconsommation.

Dans l'installation électrique terminale 4b, les consignes sont transmises par l'intermédiaire d'une « box » 24 faisant fonction de passerelle entre l'au moins un système d'information 17 et les dispositifs selon l'invention de l'installation 1b et 1c qui comprennent les moyens de réception des consignes appropriés. Le compteur 15b de l'installation 4b n'est pas directement partie prenante de la mise en oeuvre de l'invention dans cet exemple. Le compteur 15b, s'il est communiquant, peut avantageusement être exploité indirectement par l'intermédiaire des courbes de charge qu'il transmet à l'au moins un système d'information 17. Ces informations permettent de vérifier l'effectivité des effacements ainsi que d'éventuelles fraudes. Il est à noter que le nombre de dispositifs selon l'invention présent dans chaque installation terminale doit être connu de l'au moins un système d'information assurant la gestion du procédé. En effet, tous les dispositifs en capacité de recevoir simultanément l'au moins un consigne dans une même installation ajoutent leurs contributions respectives en termes de quantités de puissance et d'énergie pouvant être réduites.

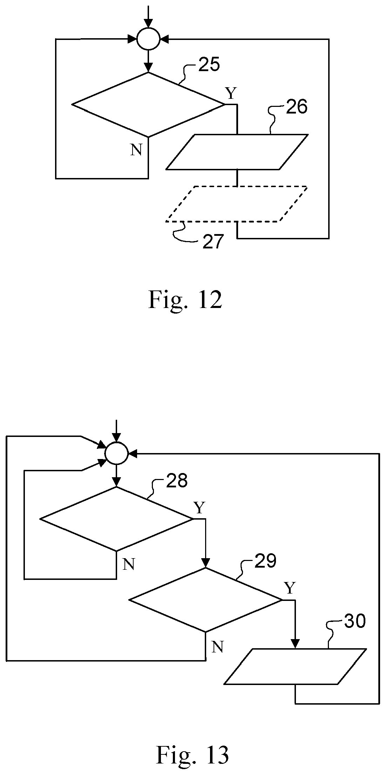

La **figure 12** illustre les étapes du procédé pour produire des actions permettant l'exploitation de l'invention sous l'angle de l'équilibrage de la production et de la demande d'énergie dans un réseau électrique en agissant sur la demande. Dans le cadre de la surveillance continue de l'équilibre entre l'énergie produite et l'énergie consommée au sein d'un réseau d'électricité, l'énergie produite est continûment comparée 25 à l'énergie consommée. Si la quantité d'énergie consommée excède la quantité d'énergie produite (résultat Y au test 25) alors les moyens de surveillance et de gestion du réseau électrique transmettent 26, à une pluralité de systèmes selon l'invention disséminés dans le réseau, une consigne d'effacement de consommation d'une quantité prédéterminée d'énergie de sorte à ajuster la quantité d'énergie consommée à la quantité d'énergie produite dans le réseau.

Préalablement à la transmission des ordres de télécommande aux systèmes selon l'invention appropriés, les moyens de surveillance et de gestion du réseau électrique calculent le cumul de consommation déficitaire d'énergie qu'il faut effacer pour équilibrer le réseau, il correspond sensiblement à la différence entre le cumul de l'énergie produite et le cumul de l'énergie consommée au sein du réseau. Les moyens de surveillance et de gestion du réseau électrique déterminent, par des requêtes dans une base de données où sont identifiés les systèmes selon l'invention, le compte client correspondant, l'adresse correspondante dans le réseau de télécommunication auquel est adossé le réseau électrique pour pouvoir les télécommander. D'autres informations sont nécessaires comme le nombre de dispositifs selon l'invention dans chaque installation terminale pour corriger les quantités d'énergie et les valeurs de puissance en conséquence, les capacités maximales d'effacement et toute autre information considérée comme pertinente par l'exploitant. Des algorithmes appropriés tenant compte, des possibilités d'adressage dans le réseau de télécommunication pour télécommander les systèmes selon l'invention, et des capacités d'effacement de chaque système pour atteindre les cumuls souhaités sont exécutés pour déterminer les systèmes destinataires de l'au moins une consigne. Une étape additionnelle 27 est prévue dans le procédé pour inscrire dans une base de données l'évènement que constitue le fait qu'un système selon l'invention déterminé, associé à un compte client ait reçu à une date et à une heure donnée un ordre de télécommande pour effacer une consommation associée à une quantité d'énergie électrique donnée. Cette étape 27 a pour objet la mémorisation d'informations utilisables ultérieurement dans le cadre de l'exploitation de l'invention sous l'angle économique. L'invention prévoit en outre que soit mis en oeuvre dans les mêmes appareils et dans les mêmes systèmes de gestion associés, des moyens pour mettre en marche les charges de puissance pilotées ayant des capacités de stockage d'énergie associées dans le cas où il apparaitrait que la production d'énergie dans le réseau électrique excèderait la demande. Le coût marginal de cet ajout fonctionnel est quasi-nul en ce qu'il repose sur l'utilisation des mêmes moyens physique que l'invention, que seul les logiciels embarqués dans les dispositifs 1 et dans les systèmes de gestion associés sont à modifier en conséquence.

La figure 13 illustre les étapes du procédé pour produire des informations permettant l'exploitation de l'invention sous l'angle économique.
Lorsqu'une facture doit être produite (résultat Y au test 28) pour un client donné au titre d'une période de consommation donnée, est explorée une base de données où sont mémorisés les évènements horodatés que sont la transmission d'ordres de télécommande pour effacer la consommation d'une quantité prédéterminée d'énergie électrique selon l'invention. Si cette exploration de la base de donnée fait ressortir des évènements résultant de la mise en oeuvre de l'invention pour le client donné sur la période de consommation donnée (résultat Y au test 29) alors des traitements 30 sont exécutés pour valoriser l'effacement des consommations au bénéfice des utilisateurs qui consentent à cette restriction d'usage, et le cas échéant au bénéfice des intermédiaires assurant l'agrégation des capacités d'effacement diffuses, en tenant compte aussi le cas échéant de la nature latente ou effective des effacements réalisés. Les demandes de dérogations venant de clients qui donnent lieu à la transmission d'une consigne annulant l'effet de la réception d'une consigne antérieur d'effacement conduisent à des corrections le cas échéant.

Bien entendu, l'invention n'est pas limitée aux exemples qui viennent d'être décrits et de nombreux aménagements peuvent y être apportés sans sortir du cadre de l'invention, notamment en combinant plusieurs variantes dans la même mise en oeuvre ou en combinant différemment des éléments pris dans plusieurs exemples.

## Revendications

1. Dispositif (1) pour piloter au moins une charge électrique de puissance (2) dans le but de réduire la puissance électrique susceptible d'être consommée dans une installation terminale d'un réseau électrique comprenant un compteur d'énergie électrique derrière lequel le dispositif est raccordé, le dispositif étant **caractérisé en ce qu'**il est agencé pour recevoir au moins une consigne associée à une quantité prédéterminée d'énergie dont la réception déclenche la limitation, pendant un temps déterminé, de la puissance pouvant être consommée par l'au moins une charge électrique de puissance, à une valeur limite supérieure déterminée qui est inférieure à la puissance maximale de fonctionnement de l'au moins une charge électrique de puissance.

2. Dispositif selon la revendication 1, caractérisé, dans le cas où l'au moins une charge électrique de puissance pilotée est en marche lorsque l'au moins une consigne est reçue, en ce que la puissance consommée par l'au moins une charge électrique de puissance est réduite, pendant un temps déterminé, à une valeur déterminée qui est inférieure à la puissance qui était consommée avant la réception de l'au moins une consigne.

3. Dispositif selon l'une quelconque des revendications 1 ou 2, **caractérisé en ce que** la durée dudit temps déterminé est imposée par la réception de l'au moins une consigne.

4. Dispositif selon l'une quelconque des revendications précédentes, **caractérisé en ce que** la durée dudit temps déterminé est calculée en fonction de la valeur d'une puissance et de ladite quantité prédéterminée d'énergie.

5. Dispositif selon l'une quelconque des revendications précédentes, **caractérisé en ce que** ladite valeur d'une puissance est obtenue à partir d'une information contenue dans une mémoire du dispositif.

6. Dispositif selon l'une quelconque des revendications précédentes, **caractérisé en ce qu'**il comprend en outre des moyens pour communiquer avec le compteur d'énergie électrique de l'installation terminale du réseau électrique derrière lequel il est raccordé.

7. Dispositif selon la revendication 6, **caractérisé en ce que** ladite valeur d'une puissance est obtenue à partir d'au moins une mesure issue du compteur d'énergie électrique derrière lequel il est raccordé.

8. Dispositif selon l'une quelconque des revendications précédentes, **caractérisé en ce que** ladite valeur d'une puissance est obtenue à partir de moyens pour mesurer une puissance électrique compris dans le dispositif.

9. Dispositif selon l'une quelconque des revendications précédentes, **caractérisé en ce que** la durée pendant laquelle la puissance est limitée et/ou réduite tient compte de la tension du réseau électrique dans ladite installation terminale.

10. Dispositif selon l'une quelconque des revendications précédentes, **caractérisé en ce qu'**il comprend en outre des moyens pour communiquer avec au moins un système d'information.

11. Dispositif selon l'une quelconque des revendications précédentes, **caractérisé en ce qu'**il est agencé pour modifier le pilotage de l'au moins une charge électrique de puissance en fonction d'au moins une information en rapport avec l'état fonctionnel de l'au moins une charge électrique de puissance et/ou de ressources qui lui sont associées.

12. Dispositif selon l'une quelconque des revendications précédentes, **caractérisé en ce qu'**il comprend en outre des moyens pour limiter la puissance consommée dans l'installation électrique terminale par un pilotage approprié de l'au moins une charge électrique de puissance.

13. Dispositif selon l'une quelconque des revendications précédentes, **caractérisé en ce qu'**il comprend en outre des moyens pour transmettre au moins une commande provenant d'un appareil externe à l'au moins une charge de puissance en absence de limitation et/ou de réduction de puissance.

14. Dispositif selon l'une quelconque des revendications précédentes, **caractérisé en ce qu'**il comprend en outre des moyens pour permettre à l'utilisateur de déroger à l'effet de la réception de l'au moins une consigne.

15. Système (12) pour réduire la puissance électrique, susceptible d'être consommée et/ou effectivement consommée, par au moins une charge de puissance dans une installation terminale d'un réseau électrique **caractérisé en ce qu'**il comprend un dispositif (1) selon l'une quelconque des revendications 1 à 14 et au moins une charge électrique de puissance (2).

16. Système selon la revendication 15, **caractérisé en ce qu'**il forme un appareil de production d'eau chaude sanitaire.

17. Système selon la revendication 15, **caractérisé en ce qu'**il forme un appareil de chauffage et/ou de refroidissement.

18. Système selon l'une quelconque des revendications 15 à 17, **caractérisé en ce qu'**il comprend en outre des moyens pour stocker localement de l'énergie permettant de compenser en tout ou en partie une production insuffisante d'énergie dans le réseau électrique.

19. Système selon l'une quelconque des revendications 15 à 18, **caractérisé en ce qu'**il est agencé pour recevoir de l'énergie produite par des moyens locaux permettant de compenser en tout ou en partie une production insuffisante d'énergie dans le réseau électrique.

20. Procédé pour exploiter dans un réseau électrique une pluralité de systèmes selon l'une quelconque des revendications 15 à 19, **caractérisé en ce qu'**il comprend les étapes de :
- Surveillance continue de l'équilibre entre la consommation et la production d'électricité au sein dudit réseau électrique par un système de supervision et de gestion approprié;
- Transmission par ledit système de supervision et de gestion approprié, à une pluralité déterminée de systèmes selon l'une quelconque des revendications 15 à 19, d'au moins une consigne pour ajuster la consommation d'électricité à la production en réduisant la demande de puissance électrique dans le cas d'une production déficitaire donnée.

21. Procédé selon la revendication 20, **caractérisé en ce qu'**il comprend en outre une étape de :
- Mémorisation dans au moins un système d'information, d'au moins une information en rapport avec la transmission par ledit système de supervision et de gestion approprié, à une pluralité déterminée de systèmes selon l'une quelconque des revendications 15 à 19, d'au moins une consigne pour ajuster la consommation d'électricité à la production en réduisant la demande de puissance électrique.

22. Procédé selon la revendication 21, **caractérisé en ce qu'**il comprend en outre une étape de :
- Comptabilisation dans au moins un système d'information, de la quantité d'énergie dont la consommation a été évitée dans une installation où au moins un système selon l'une quelconque des revendications 15 à 19 est mis en oeuvre.

23. Procédé selon la revendication 22, **caractérisé en ce qu'**il comprend en outre une étape de :
- Comptabilisation différenciée, dans l'au moins un système d'information, de la quantité d'énergie dont la consommation a été évitée, selon que l'au moins une charge électrique de puissance pilotée est en marche ou à l'arrêt lorsque l'au moins une consigne est reçue par le dispositif la pilotant.

24. Procédé selon l'une quelconque des revendications 20 à 23, **caractérisé en ce qu'**il comprend en outre une étape de :
- Demande de dérogation.

25. Application du procédé selon les revendications 20 à 24 pour la gestion d'un réseau de distribution d'énergie électrique comprenant des sources d'énergie à production intermittente.

26. Application du procédé selon les revendications 20 à 24 dans le cadre d'un service de gestion de la réduction de la consommation d'énergie électrique.

27. Application du procédé selon les revendications 20 à 24 en complément d'un service de fourniture d'eau chaude sanitaire et/ou de chauffage et/ou de refroidissement et/ou de fourniture d'électricité.

## Patentansprüche

1. Vorrichtung (1) zum Ansteuern mindestens einer elektrischen Last (2) mit dem Ziel, den elektrischen Leistungsverbrauch zu verringern, der von einer Endeinrichtung eines elektrischen Netzes verbraucht werden kann, zu dem ein Stromzähler gehört, hinter dem die Vorrichtung angeschlossen ist, die Vorrichtung ist **dadurch gekennzeichnet, dass** sie so angeordnet ist, dass sie mindestens einen Sollwert empfängt, der einer vorbestimmten Menge elektrischer Energie zugeordnet ist, deren Empfang für einen bestimmten Zeitraum die Begrenzung der Leistung, die von der mindestens einen elektrischen Last verbraucht werden kann, auf einen bestimmten oberen Grenzwert, der unter der maximalen Betriebsleistung von der mindestens einen elektrischen Last liegt, auslöst.

2. Vorrichtung nach Anspruch 1, die in dem Fall, dass die mindestens eine angesteuerte elektrische Last in Betrieb ist, wenn der mindestens eine Sollwert empfangen wird, **dadurch gekennzeichnet ist, dass** die Leistung, die von der mindestens einen elektrischen Last verbraucht wird, für einen bestimmten Zeitraum auf einen bestimmten Wert verringert wird, der unter der Leistung liegt, die vor dem Empfang des mindestens einen Sollwerts verbraucht wurde.

3. Vorrichtung nach einem der Ansprüche 1 oder 2, die **dadurch gekennzeichnet ist, dass** die Dauer des genannten bestimmten Zeitraums durch den Empfang des mindestens einen Sollwerts vorgeschrieben wird.

4. Vorrichtung nach einem der vorgenannten Ansprüche, die **dadurch gekennzeichnet ist, dass** die Dauer des genannten bestimmten Zeitraums in Bezug auf den Wert einer Leistung und die genannte vorbestimmte Menge elektrischer Energie berechnet wird.

5. Vorrichtung nach einem der vorgenannten Ansprüche, die **dadurch gekennzeichnet ist, dass** der genannte Wert einer Leistung durch eine Information erhalten wird, die sich in einem Speicher der Vorrichtung befindet.

6. Vorrichtung nach einem der vorgenannten Ansprüche, die **dadurch gekennzeichnet ist, dass** sie des Weiteren Mittel zur Kommunikation mit dem Stromzähler der Endeinrichtung des elektrischen Netzes umfasst, hinter dem sie angeschlossen ist.

7. Vorrichtung nach Anspruch 6, die **dadurch gekennzeichnet ist, dass** der genannte Wert einer Leistung durch mindestens einen Messwert erhalten wird, der aus dem Stromzähler stammt, hinter dem sie angeschlossen ist.

8. Vorrichtung nach einem der vorgenannten Ansprüche, die **dadurch gekennzeichnet ist, dass** der genannte Wert einer Leistung durch Mittel zur Messung einer elektrischen Leistung erhalten wird, die in der Vorrichtung enthalten sind.

9. Vorrichtung nach einem der vorgenannten Ansprüche, die **dadurch gekennzeichnet ist, dass** die Dauer, während der die Leistung begrenzt und/oder verringert wird, die Spannung des Stromnetzes in der genannten Endeinrichtung berücksichtigt.

10. Vorrichtung nach einem der vorgenannten Ansprüche, die **dadurch gekennzeichnet ist, dass** sie des Weiteren Mittel zur Kommunikation mit mindestens einem Informationssystem enthält.

11. Vorrichtung nach einem der vorgenannten Ansprüche, die **dadurch gekennzeichnet ist, dass** sie ausgelegt ist, um die Ansteuerung der mindestens einen elektrischen Last gemäß mindestens einer Information im Zusammenhang mit dem Betriebszustand der mindestens einen elektrischen Last und/oder Ressourcen zu ändern, die ihr zugeordnet sind.

12. Vorrichtung nach einem der vorgenannten Ansprüche, die **dadurch gekennzeichnet ist, dass** sie des Weiteren Mittel umfasst, um die in der elektrischen Endeinrichtung verbrauchte Leistung durch eine angemessene Ansteuerung von der mindestens einen elektrischen Last zu verringern.

13. Vorrichtung nach einem der vorgenannten Ansprüche, die **dadurch gekennzeichnet ist, dass** sie des Weiteren Mittel umfasst, um mindestens einen Befehl von einem externen Gerät an die mindestens eine Last weiterzuleiten, wenn die Begrenzung und/oder Verringerung der Leistung fehlt.

14. Vorrichtung nach einem der vorgenannten Ansprüche, die **dadurch gekennzeichnet ist, dass** sie des Weiteren Mittel umfasst, die es dem Anwender ermöglichen, von der Wirkung des Empfangs des mindestens einen Sollwerts abzuweichen.

15. System (12), um die elektrische Leistung zu verringern, die von mindestens einer Last in einer Endeinrichtung eines elektrischen Netzes verbraucht werden kann und/oder tatsächlich verbraucht wird, und dass **dadurch gekennzeichnet ist, dass** es eine Vorrichtung (1) nach einem der Ansprüche 1 bis 14 und mindestens eine elektrische Last (2) umfasst.

16. System nach Anspruch 15, das **dadurch gekennzeichnet ist, dass** es einen Brauchwasserheizer bildet.

17. System nach Anspruch 15, das **dadurch gekennzeichnet ist, dass** es eine Heizanlage und/oder Kühlanlage bildet.

18. System nach einem der Ansprüche 15 bis 17, dass **dadurch gekennzeichnet ist, dass** es des Weiteren Mittel zur lokalen Speicherung von Energie umfasst, die eine unzureichende Energieproduktion im elektrischen Netz ganz oder teilweise ausgleichen können.

19. System nach einem der Ansprüche 15 bis 18, dass **dadurch gekennzeichnet ist, dass** es ausgelegt ist, um Energie von lokal erzeugten Mitteln zu erhalten, damit eine unzureichende Energieproduktion im elektrischen Netz ganz oder teilweise ausgeglichen werden kann.

20. Verfahren, um in einem elektrischen Netz eine Vielzahl von Systemen nach einem der Ansprüche 15 bis 19 zu betreiben, das **dadurch gekennzeichnet ist, dass** es die folgenden Phasen umfasst:
- Kontinuierliche Überwachung des Gleichgewichts von Stromverbrauch und Stromproduktion im genannten elektrischen Netz durch ein geeignetes Überwachungs- und Verwaltungssystem;
- Weiterleitung durch das genannte geeignete Überwachungs- und Verwaltungssystem an eine festgelegte Vielzahl von Systemen nach einem der Ansprüche 15 bis 19 von mindestens einem Sollwert, um den Stromverbrauch an die Produktion anzupassen, indem der Bedarf an elektrischer Leistung im Fall einer gegebenen defizitären Produktion verringert wird.

21. Verfahren nach Anspruch 20, das **dadurch gekennzeichnet ist, dass** es des Weiteren folgende Phase umfasst:
- Speicherung in mindestens einem Informationssystem mindestens einer Information im Zusammenhang mit der Weiterleitung durch das genannte geeignete Überwachungs- und Verwaltungssystem an eine festgelegte Vielzahl von Systemen nach einem der Ansprüche 15 bis 19 von mindestens einem Sollwert, um den Stromverbrauch an die Produktion anzupassen, indem der Bedarf an elektrischer Leistung verringert wird.

22. Verfahren nach Anspruch 21, das **dadurch gekennzeichnet ist, dass** es des Weiteren folgende Phase umfasst:
- Erfassung in mindestens einem Informationssystem der Energiemenge, deren Verbrauch in einer Einrichtung verhindert wurde, in der mindestens ein System nach einem der Ansprüche 15 bis 19 eingesetzt wird.

23. Verfahren nach Anspruch 22, das **dadurch gekennzeichnet ist, dass** es des Weiteren folgende Phase umfasst:
- Differenzierte Erfassung in dem mindestens einen Informationssystem der Energiemenge, deren Verbrauch verhindert wurde, je nachdem ob die mindestens eine angesteuerte elektrische Last in Betrieb oder außer Betrieb ist, wenn der mindestens eine Sollwert von der sie steuernden Vorrichtung empfangen wird.

24. Verfahren nach einem der Ansprüche 20 bis 23, das **dadurch gekennzeichnet ist, dass** es des Weiteren folgende Phase umfasst:
- Antrag auf Ausnahmeregelung.

25. Anwendung des Verfahrens nach den Ansprüchen 20 bis 24 für die Verwaltung eines elektrischen Energieverteilungsnetzes, das Energiequellen mit intermittierender Produktion umfasst.

26. Anwendung des Verfahrens nach den Ansprüchen 20 bis 24 im Rahmen eines Dienstes für die Verwaltung der Verringerung des Verbrauchs elektrischer Energie.

27. Anwendung des Verfahrens nach den Ansprüchen 20 bis 24 als Ergänzung zu einem Dienst für die Lieferung von Warmbrauchwasser und/oder die Heizung und/oder Kühlung und/oder die Stromlieferung.

## Claims

1. Device (1) for driving at least one power electric load (2) in order to reduce the electric power likely to be consumed in a terminal installation of an electrical network comprising an electrical energy meter behind which the device is connected, the device being **characterized in that** it is fitted for receiving at least one setpoint associated with a predetermined amount of energy whose reception triggers the limitation, for a predetermined time, of the power that may be consumed by the at least one power electric load, at a determined upper limit value that is less than the maximum operating power of the at least one power electric load.

2. Device according to claim 1, **characterized, in** the case where the at least one power electric load is on when the at least one setpoint is received, **in that** the power consumed by the at least one power electric load is reduced, for a determined time, to a determined value that is less than the power that was consumed before the reception of the at least one setpoint.

3. Device according to any of claims 1 or 2, **characterized in that** the length of said determined time is imposed by the reception of the at least one setpoint.

4. Device according to any of the previous claims, **characterized in that** the length of said predetermined time is calculated according to the value of a power and said predetermined amount of energy.

5. Device according to any of the previous claims, **characterized in that** said value of a power is obtained from information contained in a memory of the device.

6. Device according to any of the previous claims, **characterized in that** it further comprises means for communicating with the electrical energy meter of the terminal installation of the electrical network behind which it is connected.

7. Device according to claim 6, **characterized in that** said value of a power is obtained from at least one measurement transmitted by the electrical energy meter behind which it is connected.

8. Device according to any of the previous claims, **characterized in that** said value of a power is obtained from means for measuring an electric power comprised in the device.

9. Device according to any of the previous claims, **characterized in that** the length during which power is limited and/or reduced takes into account the electrical network voltage in said terminal installation.

10. Device according to any of the previous claims, **characterized in that** it further comprises means for communicating with at least one information system.

11. Device according to any of the previous claims, **characterized in that** it is fitted for modifying the driving of the at least one power electric load according to at least one information related to the functional status of the at least one power electric load and/or of resources associated with it.

12. Device according to any of the previous claims, **characterized in that** it further comprises means for limiting the power consumed in the terminal electrical installation by appropriate driving of the at least one power electric load.

13. Device according to any of the previous claims, **characterized in that** it further comprises means for transmitting at least one command from an external apparatus to the at least one power load in the absence of power limitation and/or reduction.

14. Device according to any of the previous claims, **characterized in that** it further comprises means for allowing the user to derogate from the effect of receiving the at least one setpoint.

15. System (12) for reducing the electric power, likely to be consumed and/or effectively consumed by at least one power load in a terminal installation of an electrical network **characterized in that** it comprises a device (1) according to any of claims 1 to 14 and at least one power electric load (2).

16. System according to claim 15, **characterized in that** it forms a sanitary water heating apparatus.

17. System according to claim 15, **characterized in that** it forms a heating and/or cooling apparatus.

18. System according to any of claims 15 to 17, **characterized in that** it further comprises means for locally storing energy to fully or partly offset insufficient energy production in the electrical network.

19. System according to any of claims 15 to 18, **characterized in that** it is fitted for receiving energy produced by local means to fully or partly offset insufficient energy production in the electrical network.

20. Method for operating in an electrical network a plurality of systems according to any of claims 15 to 19, **characterized in that** it comprises the steps of:
- Continuous monitoring of the balance between electricity consumption and production in said electrical network by an appropriate supervision and management system;
- Transmission by said appropriate supervision and management system to a determined plurality of systems according to any of claims 15 to 19, of at least one setpoint for adjusting consumption of electricity to production by reducing demand for electric power in the case of a given deficit production.

21. Method according to claim 20, **characterized in that** it further comprises a step of:
- Storing, in at least one information system, of at least one information related to the transmission by said appropriate supervisory and management system, to a determined plurality of systems according to any of claims 15 to 19, of at least one setpoint for adjusting the consumption of electricity to production by reducing electric power demand.

22. Method according to claim 21, **characterized in that** it further comprises a step of:
- Accounting in at least one information system, of the amount of energy consumption that has been avoided in an installation where at least one system according to any of claims 15 to 19 is implemented.

23. Method according to claim 22, **characterized in that** it further comprises a step of:
- Differentiated accounting, in the at least one information system, of the amount of energy consumption avoided, depending on whether the at least one power electric load is on or off when the at least one setpoint is received by the device driving it.

24. Method according to any of claims 20 to 23, **characterized in that** it further comprises a step of:
- Derogation request.

25. Use of the method according to claims 20 to 24 for the management of an electrical network comprising electrical sources having intermittent production.

26. Use of the method according to claims 20 to 24 for reducing electrical energy consumption.

27. Use of the method according to claims 20 to 24, complementary to a service supplying sanitary hot water and/or heating and/or cooling and/or electricity supply.
